# EUROPÄISCHE PATENTSCHRIFT

(11) **EP 1 199 346 B1**
(45) Veröffentlichungstag und Bekanntmachung des Hinweises auf die Patenterteilung: **23.01.2008**
(21) Anmeldenummer: 01122634.7
(22) Anmeldetag: 27.09.2001
(51) Int. Cl.: C09K 19/30

(54) **Flüssigkristallines Medium**
Liquid crystal medium
Milieu liquide cristallin

(30) Priorität: 20.10.2000 DE 10051995
(43) Veröffentlichungstag der Anmeldung: 24.04.2002
(73) Patentinhaber: Merck Patent GmbH, 64293 Darmstadt (DE)
(72) Erfinder: Lüssem, Georg, Dr., 64372 Ober-Ramstadt (DE); Klement, Dagmar, 64846 Gross-Zimmern (DE); Reiffenrath, Volker, 64380 Rossdorf (DE)

(56) Entgegenhaltungen:
- EP-A- 0 916 639
- CH-A- 684 409
- DE-A- 10 002 462
- DE-A- 19 855 757
- DE-A- 19 959 723

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitem wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, dadurch gekennzeichnet, daß es eine oder mehrere Verbindungen der Formel I 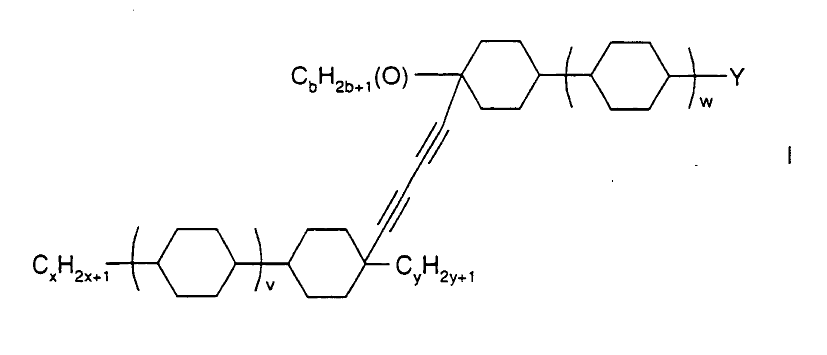 und
eine oder mehrere Verbindungen der Formel IA 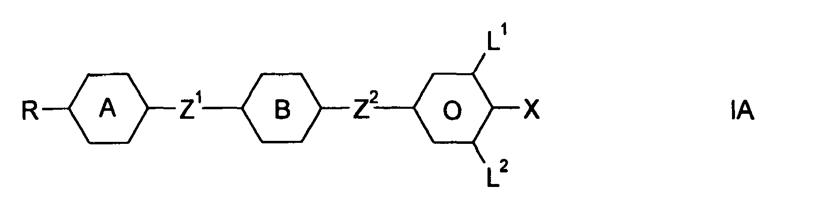 enthält,
worin die einzelnen Reste folgende Bedeutungen besitzen:
- a, b, x und y: jeweils unabhängig voneinander 0 bis 10,
- v: 0 oder 1,
- w: 0,
- R: einen halogenierten oder unsubstituierten Alkylrest mit bis zu 12 C-Atomen, wobei in diesen Resten auch eine oder mehrere CH₂-Gruppen jeweils unabhängig voneinander durch -CH=CH-, -C≡C-, -O-, -CO-O- oder -O-CO- so ersetzt sein können, daß O-Atome nicht direkt miteinander verknüpft sind,
- X: F, Cl, CN, SF₅, halogenierter Alkylrest, halogenierter Alkenylrest, halogenierter Alkoxyrest oder halogenierter Alkenyloxyrest mit bis zu 6 C-Atomen,
- Y: CₐH₂ₐ₊₁, CF₃, OCF₃, OCHF₂, OCF₂CHFCF₃, SF₅, F oder Cl,
- Z¹ und Z²: jeweils unabhängig voneinander -CF₂O- oder eine Einfachbindung, wobei Z¹ ≠ Z² ist, 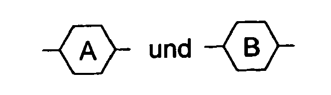 jeweils unabhängig voneinander 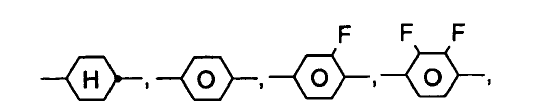 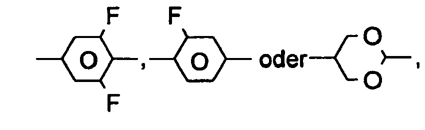 und
- L¹ und L²: jeweils unabhängig voneinander H oder F.

Die Verbindungen der Formeln I und IA besitzen einen breiten Anwendungsbereich. In Abhängigkeit von der Auswahl der Substituenten können diese Verbindungen als Basismaterialien dienen aus denen flüssigkristalline Medien zum überwiegenden Teil zusammengesetzt sind; es können aber auch Verbindungen der Formeln I und IA flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren. Die erfindungsgemäßen Mischungen mit kleinen Δn-Werten finden insbesondere in reflektiven Displays Anwendung.

Die Verbindungen der Formeln I und IA sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Die Verbindungen der Formel I sind z.B. bekannt aus der DE-A-19959723. Weitere Alkinverbindungen für flüssigkristalline Mischungen werden in den Druckschriften CH 684409 A5, EP 0916639 A1, DE 10002462 A1 und DE 19855757 A1 offenbart.

Die erfindungsgemäßen Mischungen enthalten vorzugsweise ein oder zwei Verbindungen der Formel I. Die Verbindungen der Formel I besitzen vorzugsweise ein Δε von ≤ 0.

Bevorzugte Mischungen enthalten ein oder mehrere Verbindungen der Formeln I1, I4, I5 und I6:

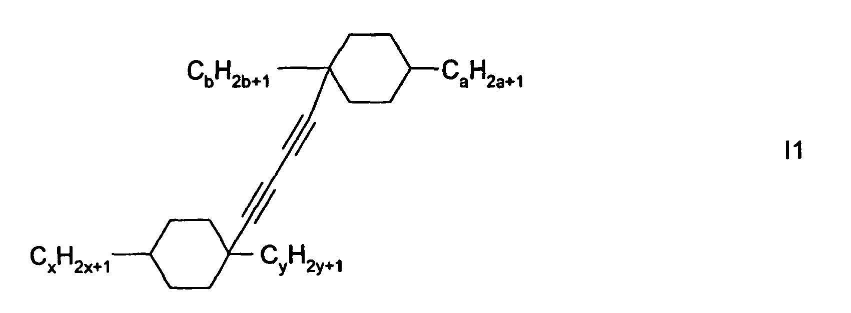

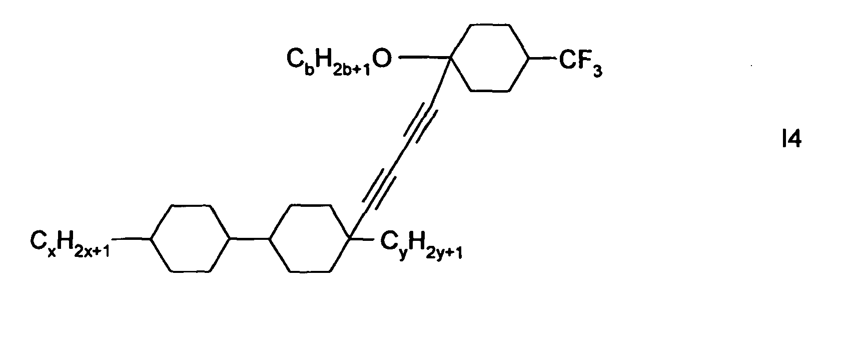

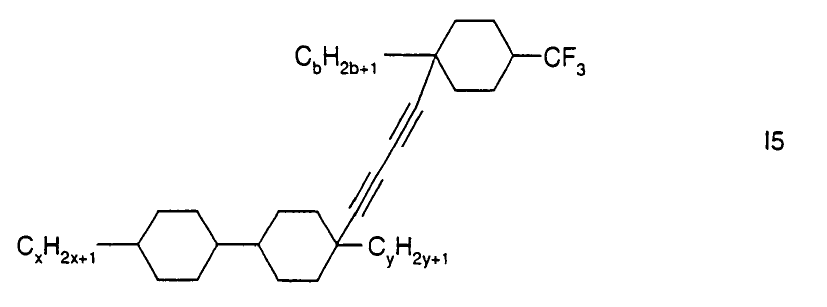

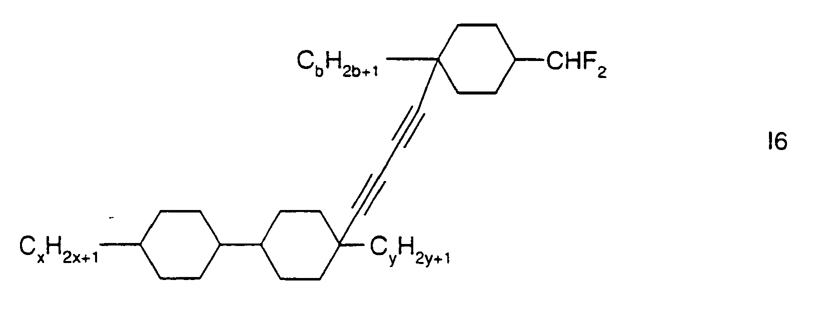

Falls R in der Verbindung der Formel IA einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome.

Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)-propyl, 3-(Ethoxycarbonyl)propyl oder 4-(Methoxycarbonyl)-butyl.

Falls R einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyloxypentyl, 6-Methacryloyloxyhexyl, 7-Methacryloyloxyheptyl, 8-Methacryloyloxyoctyl, 9-Methacryloyloxynonyl.

Falls R einen einfach durch CN oder CF₃ substituerten Alkyl- oder Alkenylrest bedeutet, so ist dieser Rest vorzugsweise geradkettig. Die Substitution durch CN oder CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formeln I und IA werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel IA sind z. B. bekannt aus der DE-OS-40 06 921.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die Forderung nach hohem Klärpunkt, nematischer Phase bei tiefer Temperatur sowie einem hohen Δε konnte bislang nur unzureichend erfüllt werden. Systeme wie z.B. ZLI-3119 weisen zwar vergleichbaren Klärpunkt und vergleichbar günstige Viskositäten auf, besitzen jedoch ein Δε von nur +3.

Andere Mischungssysteme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei Beibehaltung der nematischen Phase bis -20 °C und bevorzugt bis -30 °C, besonders bevorzugt bis -40 °C, Klärpunkt oberhalb 70 °C, vorzugsweise oberhalb 80 °C, besonders bevorzugt oberhalb 85 °C, gleichzeitig dielektrische Anisotropiewerte Δε ≥ 6, vorzugsweise ≥8 und einen hohen Wert für den spezifischen Widerstand zu erreichen, wodurch hervorragende STN- und MKF-Anzeigen erzielt werden können. Insbesondere sind die Mischungen durch kleine Operationsspannungen gekennzeichnet. Die TN-Schwellen liegen unterhalb 1,8 V, vorzugsweise unterhalb 1,6 V, besonders bevorzugt < 1,4 V.

Es versteht sich, daß durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen können unterschiedliche elektrooptische Effekte ausnutzen. So kommen unter anderem TN-Anzeigen im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975] zum Einsatz, wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Besonders bevorzugt sind jedoch MFK-Anzeigen, die als elektrooptischen Effekt den sogenannten "Axially Symmetric Mode", kurz ASM, verwenden und solche Anzeigen, die unverdrillte oder nahezu unverdrillte Flüssigkristallschichten mit planarer Orientierung verwenden, wie z. B. beim Advanced Super View, kurz ASV. Beim ASM beträgt die Polarisatorstellung vorzugsweise 45° zur Vorzugsorientierung der Flüssigkristalle. Die beiden zuletzt genannten Effekte sind besonders bevorzugt, da sie zu extrem günstigen Blickwinkelabhängigkeiten führen. Für derartige Anzeigen eignen sich die erfindungsgemäßen Flüssigkristallmischungen aufgrund ihrer kleinen Doppelbrechung besonders gut. Dies gilt auch und insbesondere für reflektive Anzeigen, die in der Regel die niedrigsten Doppelbrechungswerte erfordern.

Die Fließviskosität V₂₀ bei 20 °C der erfindungsgemäßen Mischungen ist vorzugsweise < 60 mm².s⁻¹, besonders bevorzugt < 50 mm².s⁻¹ Die Rotationsviskosität γ₁ der erfindungsgemäßen Mischungen bei 20 °C ist vorzugsweise < 250 mPa·s, besonders bevorzugt < 220 mPa·s. Der nematische Phasenbereich ist vorzugsweise mindestens 90°, insbesondere mindestens 100°. Vorzugsweise erstreckt sich dieser Bereich mindestens von -20° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 25 ms benötigt. Die Obergrenze der Schaltzeit wird durch die Bildwiederholfrequenz bestimmt. Neben der Rotationsviskosität γ₁ beeinflußt auch der Tiltwinkel die Schaltzeit. Insbesondere Mischungen mit ≥ 20 % der Verbindungen der Formel IA zeigen einen Tiltanstellwinkel von > 2,5, vorzugsweise > 3,0 im Vergleich zu dem Verkaufsprodukt ZLI-4792 der Fa. Merck KGaA.

Messungen des "Capacity Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel IA eine deutlich kleinere Abnahme des HR mit steigender Temperatur aufweisen als analoge Mischungen enthaltend anstelle den Verbindungen der Formel IA
Cyanophenylcyclohexane der Formel 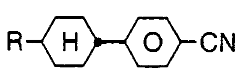 oder Ester der Formel

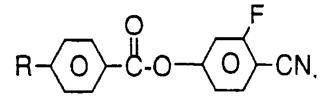

Auch die UV-Stabilität der erfindungsgemäßen Mischungen ist erheblich besser, d.h. sie zeigen eine deutlich kleinere Abnahme des HR unter UV-Belastung.

Besonders bevorzugte Verbindungen der Formel IA sind Verbindungen der Formeln IA-1 bis IA-11: 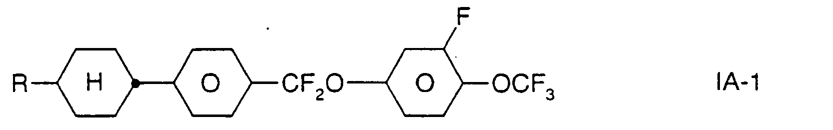 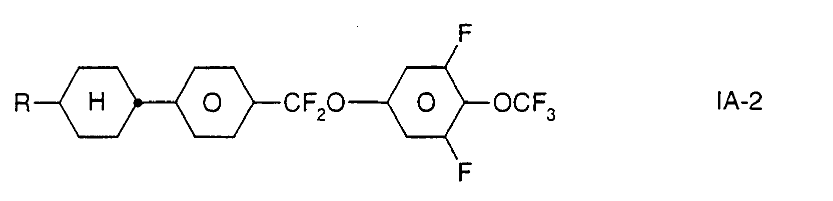 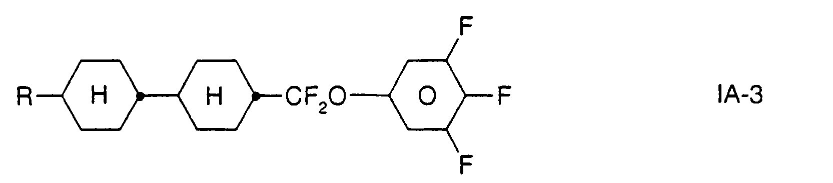 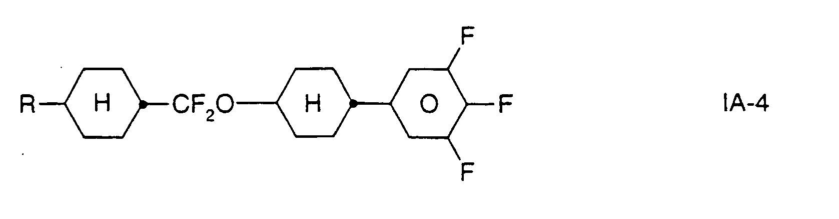 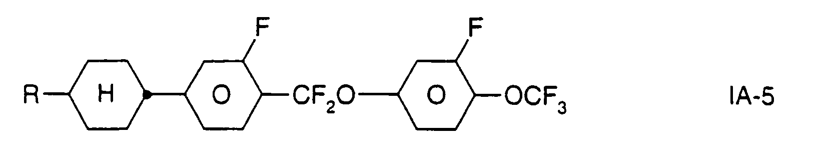 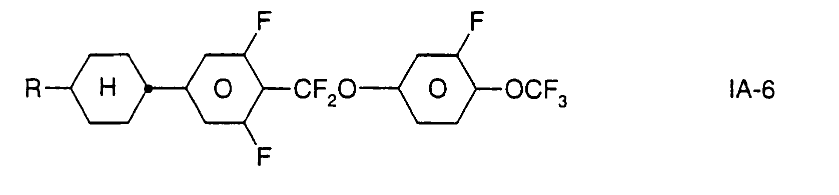 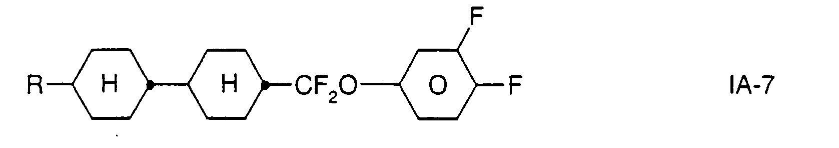 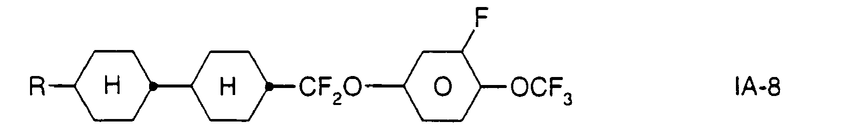 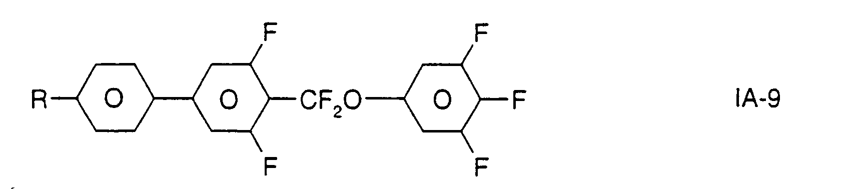 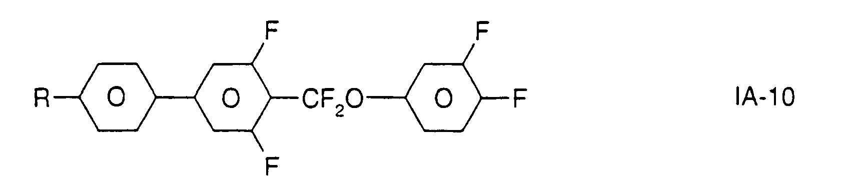 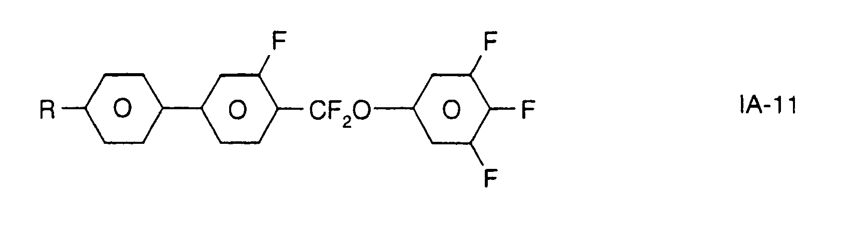 worin R die in Formel IA angegebene Bedeutung hat.

Von diesen bevorzugten Verbindungen besonders bevorzugt sind solche der Formeln IA-1, IA-2, IA-3, IA-4, IA-9 und IA-10, insbesondere der Formeln IA-1 und IA-2.

Bevorzugte Ausführungsformen der erfindungsgemäßen Mischungen sind im folgenden angegeben:
- Medium enthält zusätzlich eine oder mehrere Verbindungen ausgewählt aus der Gruppe bestehend aus den allgemeinen Formeln II bis VI: 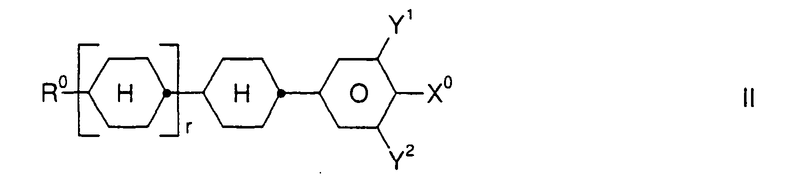 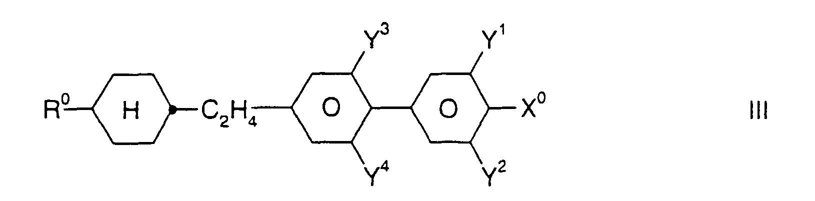 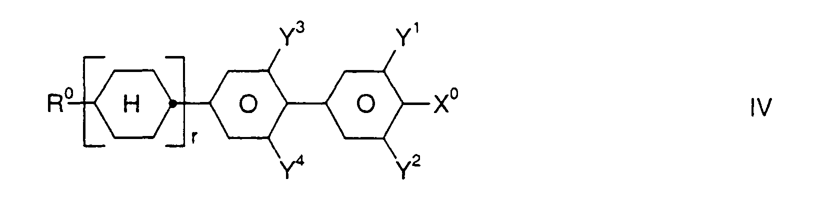 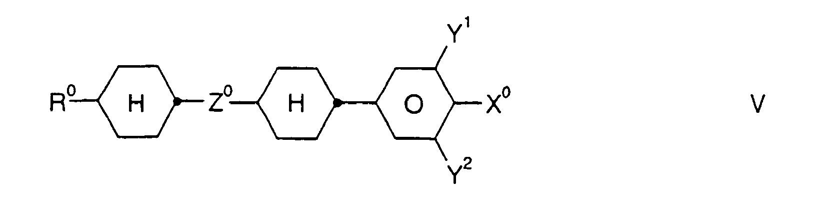 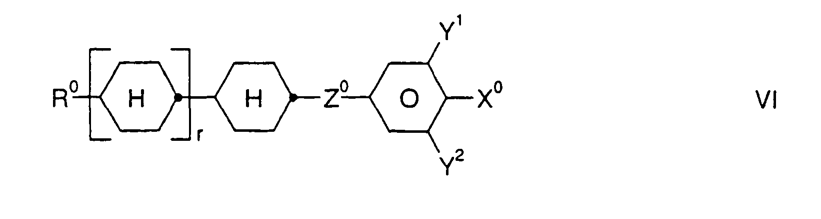
worin die einzelnen Reste die folgenden Bedeutungen haben:
- R⁰: n-Alkyl, Oxaalkyl, Fluoralkyl, Alkenyl oder Alkenyloxy mit jeweils bis zu 9 C-Atomen,
- X⁰: F, Cl, halogeniertes Alkyl, Alkenyl oder Alkoxy mit bis zu 6 C-Atomen,
- Z⁰: -C₂F₄-, -C₂H₄-, -(CH₂)₄-, -C₂F₄-, -CF=CF-, -OCH₂- oder -CH₂O-,
- Y¹ und Y²: jeweils unabhängig voneinander H oder F,
- r: 0 oder 1.

Die Verbindung der Formel IV ist vorzugsweise 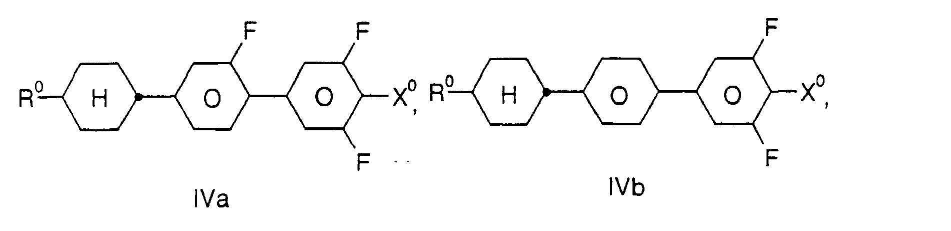 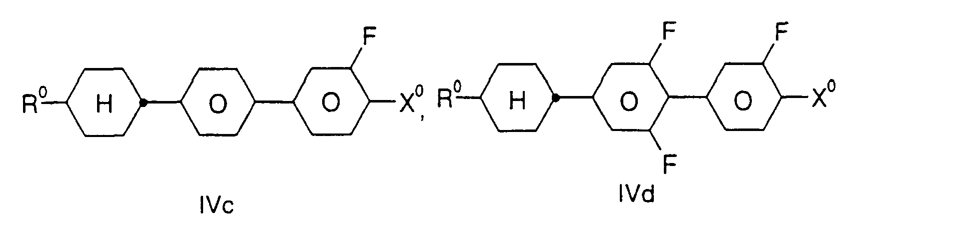 oder 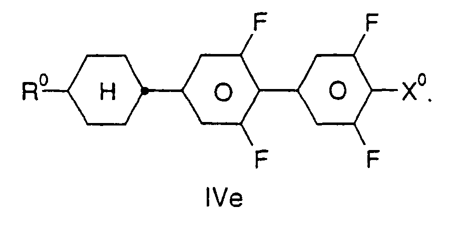
- Medium enthält zusätzlich eine oder mehrere Verbindungen ausgewählt aus der Gruppe bestehend aus den allgemeinen Formeln VII bis XII: 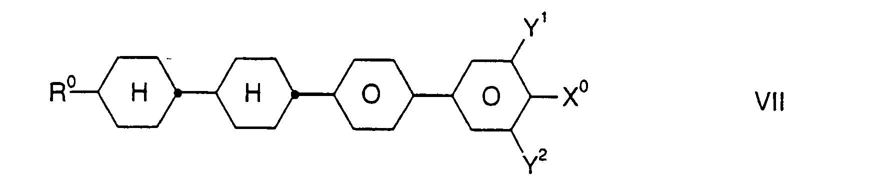 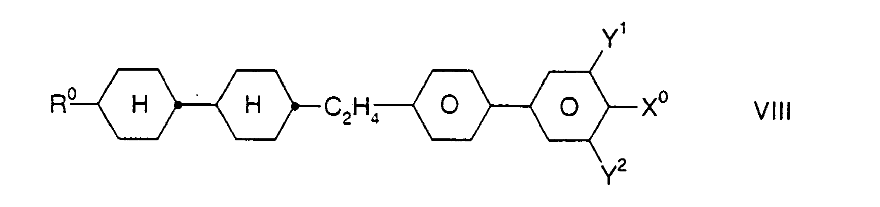 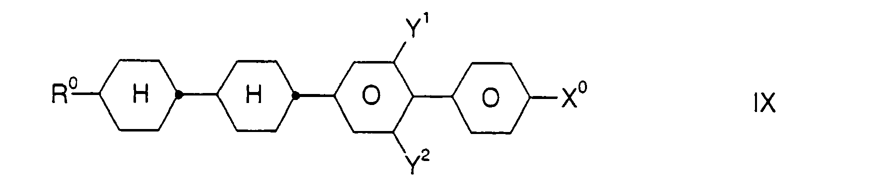 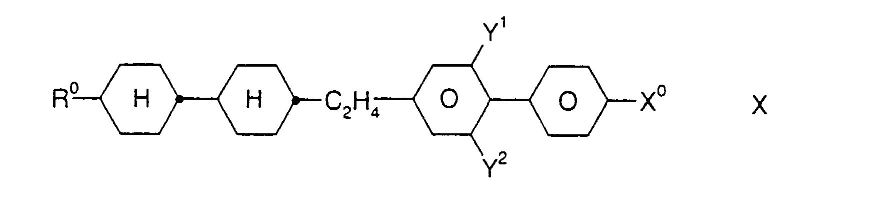 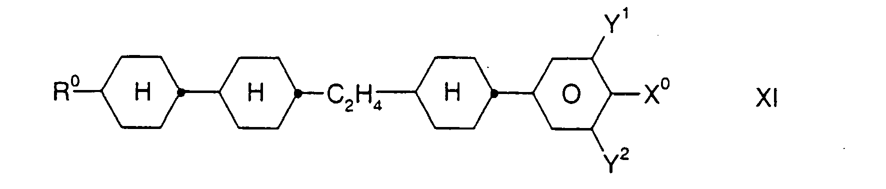 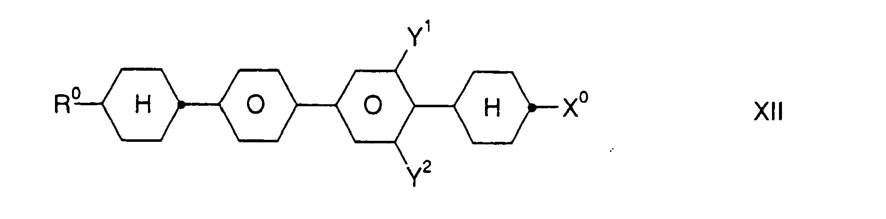 worin R⁰, X⁰, Y¹ und Y² jeweils unabhängig voneinander eine der in Anspruch 3 angegebene Bedeutung haben. X⁰ ist vorzugsweise F, Cl, CF₃, OCF₃, oder OCHF₂. R⁰ bedeutet vorzugsweise Alkyl, Oxaalkyl, Fluoralkyl oder Alkenyl mit jeweils bis zu 6 C-Atomen.
- Medium enthält zusätzlich eine oder mehrere Verbindungen der Formel XIII 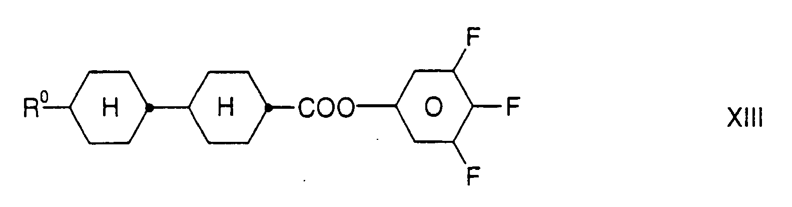 worin R⁰ die in Anspruch 3 angegebene Bedeutung hat;
- Der Anteil der Verbindung der Formel XIII ist vorzugsweise 10-30 Gew.-%, insbesondere 15-25 Gew.-%;
- Der Anteil an Verbindungen der Formeln IA und I bis VI zusammen beträgt im Gesamtgemisch mindestens 50 Gew.-%;
- Der Anteil an Verbindungen der Formel I beträgt im Gesamtgemisch 2 bis 30, besonders bevorzugt 2 bis 20 Gew.-%;
- Der Anteil an Verbindungen der Formel IA beträgt im Gesamtgemisch 10 bis 50, besonders bevorzugt 15 bis 40 Gew.-%;
- Der Anteil an Verbindungen der Formeln I, IA und II bis VI im Gesamtgemisch beträgt 30 bis 80 Gew.-%; 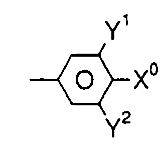 ist vorzugsweise 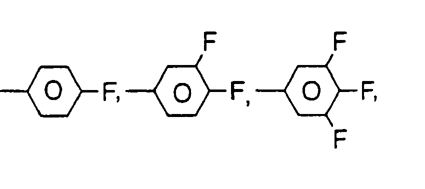 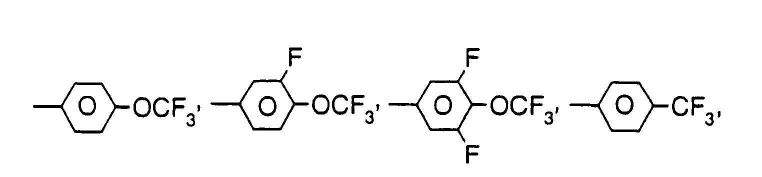 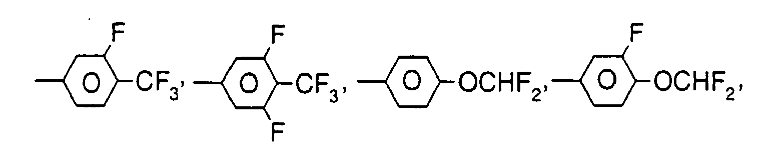 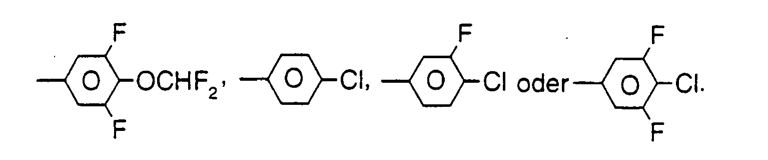
- Das Medium enthält Verbindungen der Formeln II, III, IV, V oder VI;
- R⁰ ist geradkettiges Alkyl oder Alkenyl mit 2 bis 7 C-Atomen;
- Das Medium besteht im wesentlichen aus Verbindungen der Formeln I, IA, II bis VI und XIII;
- Das Medium enthält weitere Verbindungen, vorzugsweise ausgewählt aus der folgenden Gruppe bestehend aus den allgemeinen Formeln XIV bis XVII: 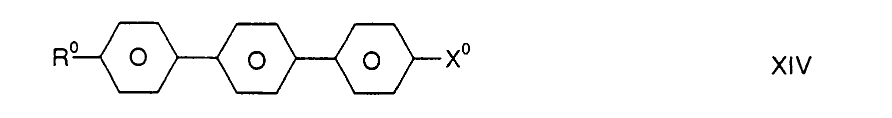 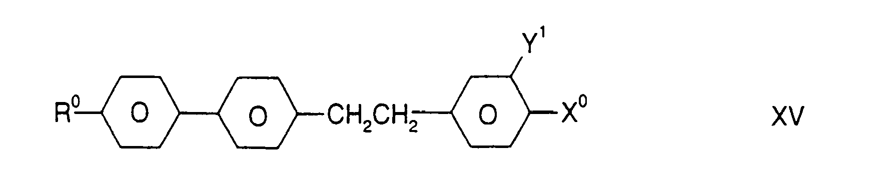 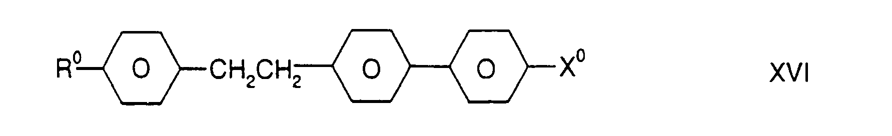 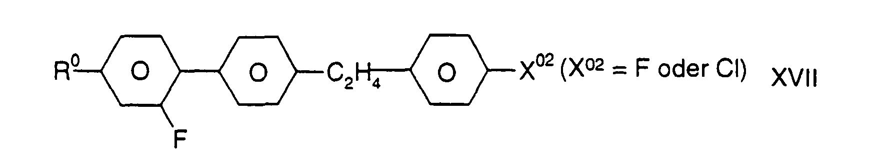 worin R⁰, Y¹ und X⁰ die oben angegebene Bedeutung haben.
- Das Medium enthält zusätzlich ein, zwei, drei oder mehr, vorzugsweise zwei oder drei, Verbindungen der Formel 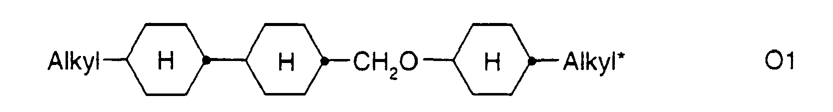 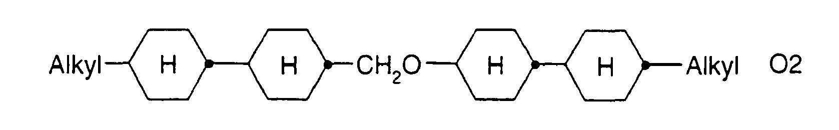 worin "Alkyl" und "Alkyl*" die nachfolgend angegebene Bedeutung haben.
   Der Anteil der Verbindungen O1 und/oder 02 in den erfindungsgemäßen Mischungen beträgt vorzugsweise 5-20 Gew.-%, insbesondere 5-15 Gew.-%.
- Das Medium enthält vorzugsweise 5-35 Gew.-% der Verbindung IVa.
- Das Medium enthält ein oder mehrere Verbindungen der Formel IVa, worin X⁰ F oder OCF₃ bedeutet.
- Das Medium enthält vorzugsweise ein oder mehrere Verbindungen der Formeln IIa bis IIg, 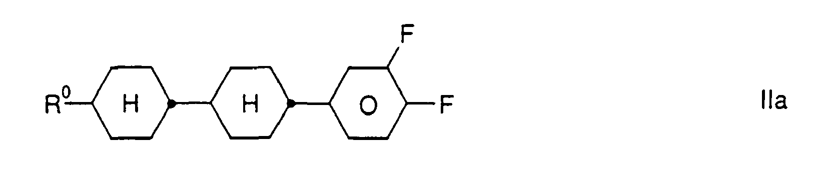 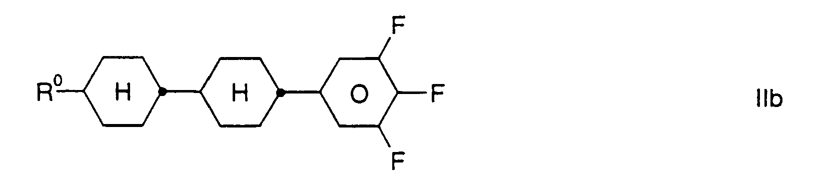 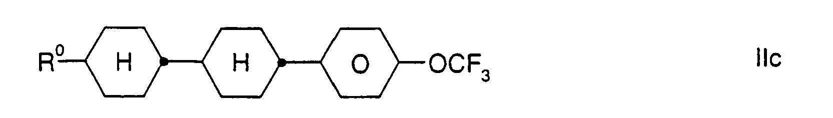 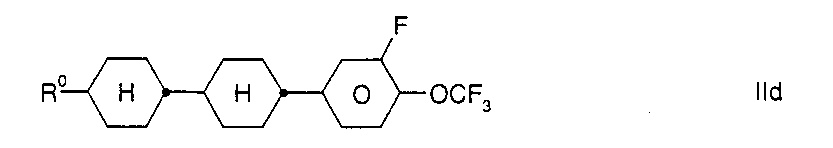 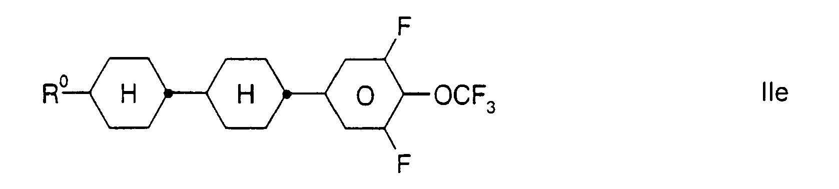 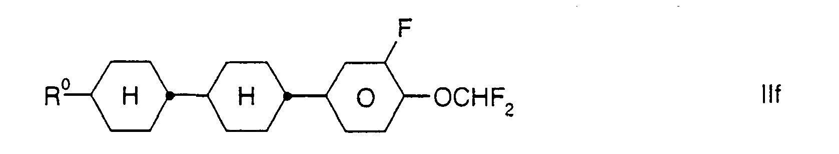 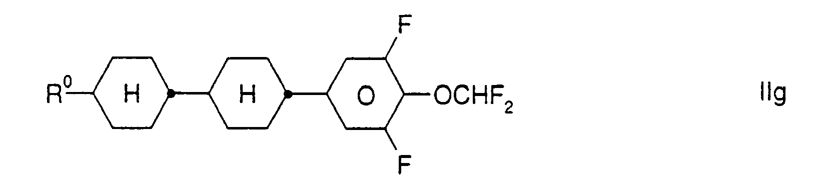 worin R⁰ die oben angegebenen Bedeutungen hat. In den Verbindungen der Formeln Ila-Ilg bedeutet R⁰ vorzugsweise Ethyl, n-Propyl, n-Butyl und n-Pentyl.
- Das Gewichtsverhältnis (I + IA) : (II + III + IV + V + VI) ist vorzugsweise 1 : 10 bis 10 : 1.
- Medium besteht im wesentlichen aus Verbindungen ausgewählt aus der Gruppe bestehend aus den allgemeinen Formeln IA und I bis XIII.
- Der Anteil der Verbindungen der Formeln IVb und/oder IVc, worin X⁰ Fluor und R⁰ C₂H₅, n-C₃H₇, n-C₄H₅ oder n-C₅H₁₁ bedeutet, beträgt im Gesamtgemisch 2 bis 20 Gew.-%, insbesondere 2 bis 15 Gew.-%;
- Das Medium enthält vorzugsweise ein, zwei, drei oder mehr, vorzugsweise zwei oder drei, Alkenylverbindungen der Formel XVIII, 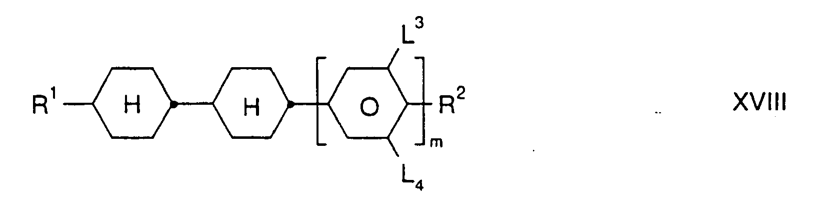
worin
- R¹: ein Alkenylrest mit 2 bis 7 C-Atomen,
- R²: einen halogenierten oder unsubstituierten Alkylrest mit bis zu 12 C-Atomen, wobei in diesen Resten auch eine oder mehrere CH₂-Gruppen jeweils unabhängig voneinander durch -CH=CH-, -C≡C-, -O-, -CO-O- oder -O-CO- so ersetzt sein können, daß O-Atome nicht direkt miteinander verknüpft sind, oder falls m = 1 ist, auch Q-Y,
- Q: CF₂, OCF₂, CFH, OCFH oder eine Einfachbindung,
- Y: F oder Cl,
- L³ und L⁴: jeweils unabhängig voneinander H oder F, und
- m: 0 oder 1 ist.

Formel XVIII umfaßt vorzugsweise folgende Verbindungen 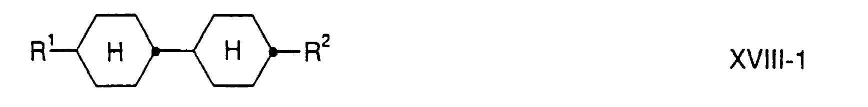 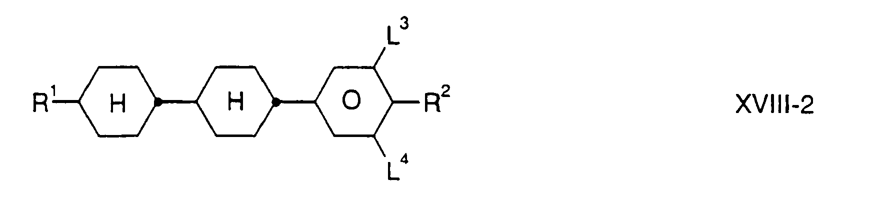 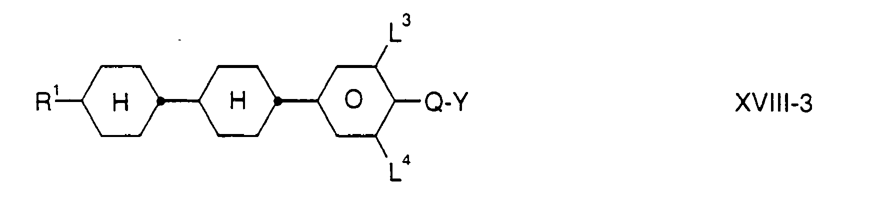 worin R¹, R², L³, L⁴, Q und Y die in Formel XVIII angegebenen Bedeutungen besitzen.

Besonders bevorzugt sind erfindungsgemäße Medien, die wenigstens eine Verbindung der Formel XVIII-1 und/oder XVIII-3, besonders bevorzugt jeweils wenigstens eine Verbindung der Formel XVIII-1, enthalten.

In den Formeln XVIII-1, XVIII-2 und XVIII-3, bedeutet R¹ besonders bevorzugt 1 E-Alkenyl oder 3 E-Alkenyl mit 2 bis 7 C-Atomen.

Besonders bevorzugte Verbindungen der Formel XVIII-1 sind solche, worin R² Alkenyl mit 2 bis 7 C-Atomen bedeutet, insbesondere solche der folgenden Formeln 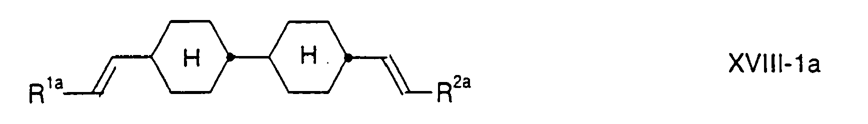 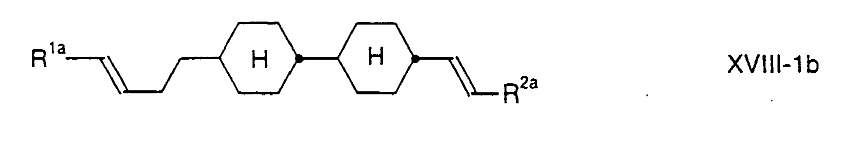 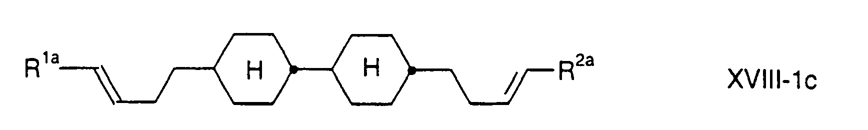 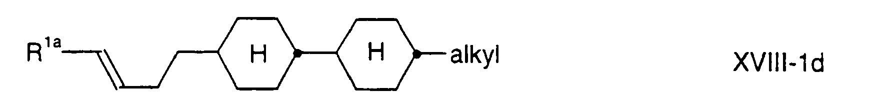 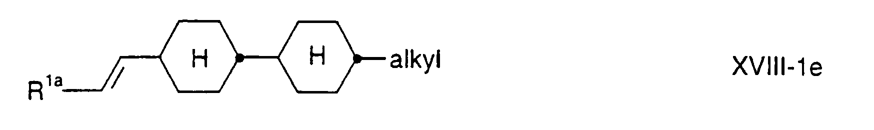 worin R^{1a} und R^{2a} jeweils unabhängig voneinander H, CH₃, C₂H₅ oder n-C₃H₇ und alkyl eine geradkettige Alkylgruppe mit 1 bis 7 C-Atomen bedeuten.

Besonders bevorzugt sind erfindungsgemäße Medien, die mindestens eine Verbindung der Formel XVIII-1a und/oder XVIII-1c enthalten, in denen R^{1a} und R^{2a} jeweils dieselbe Bedeutung aufweisen, sowie Medien, die mindestens eine Verbindung der Formel XVIII-1e enthalten.

In einer weiteren bevorzugten Ausführungsform enthalten die erfindungsgemäßen Medien eine oder mehrere Verbindungen der Formel XVIII-2. Besonders bevorzugte Verbindungen der Formel XVIII-2 sind solche, worin L¹ und L² H bedeuten, sowie solche, worin R² Alkyl mit 1 bis 8, insbesondere 1, 2 oder 3 C-Atomen und R¹ 1E-Alkenyl oder 3E-Alkenyl mit 2 bis 7, insbesondere 2, 3 oder 4 C-Atomen bedeuten.

Besonders bevorzugte Verbindungen der Formel XVIII-3 sind solche, worin L¹ und/oder L² F und Q-Y F oder OCF₃ bedeuten. Ferner bevorzugt sind Verbindungen der Formel XVIII-3, worin R¹ 1E-alkenyl oder 3E-alkenyl mit 2 bis 7, insbesondere 2, 3 oder 4 C-Atomen bedeutet.

Es wurde gefunden, daß bereits ein relativ geringer Anteil an Verbindungen der Formeln I und IA im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA ein oder mehrere Verbindungen der Formel IV enthalten, insbesondere Verbindungen der Formel IVa, worin X⁰ F oder OCF₃ bedeutet. Die Verbindungen der Formeln I bis VI sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenastoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I, IA und II + III + IV + V + VI hängt weitgehend von den gewünschten Eigenschaften, von der Wahl der Komponenten der Formeln I, IA, II, III, IV, V und/oder VI und der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I, IA und II bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I, IA und II bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formel IA und der Formel IVa zeichnen sich durch ihre niedrige Schwellenspannung aus.

Die einzelnen Verbindungen der Formeln I, IA und II bis XVII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5fachen Wert von V₁₀. Δn bezeichnet die optische Anisotropie und n den Brechungsindex. Δε bezeichnet die dielektrische Anisotropie (Δε = ε_{∥}-ε_{⊥}, wobei ε_{∥} die Dielektrizitätskonstante parallel zu den Moleküllängsachsen und ε_{⊥} die Dielektrizitätskonstante senkrecht dazu bedeutet). Die elektrooptischen Daten wurden in einer TN-Zelle im 1. Minimum (d.h. bei einem d Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R¹*, R²*, L¹*, L²* und L³*.

| Code für R¹*, R²* , L¹* , L²* , L³* | R¹* | R²* | L¹* | L²* | L³* |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OCₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CnH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

Bevorzugte Mischungskomponenten finden sich in den Tabellen A und B.

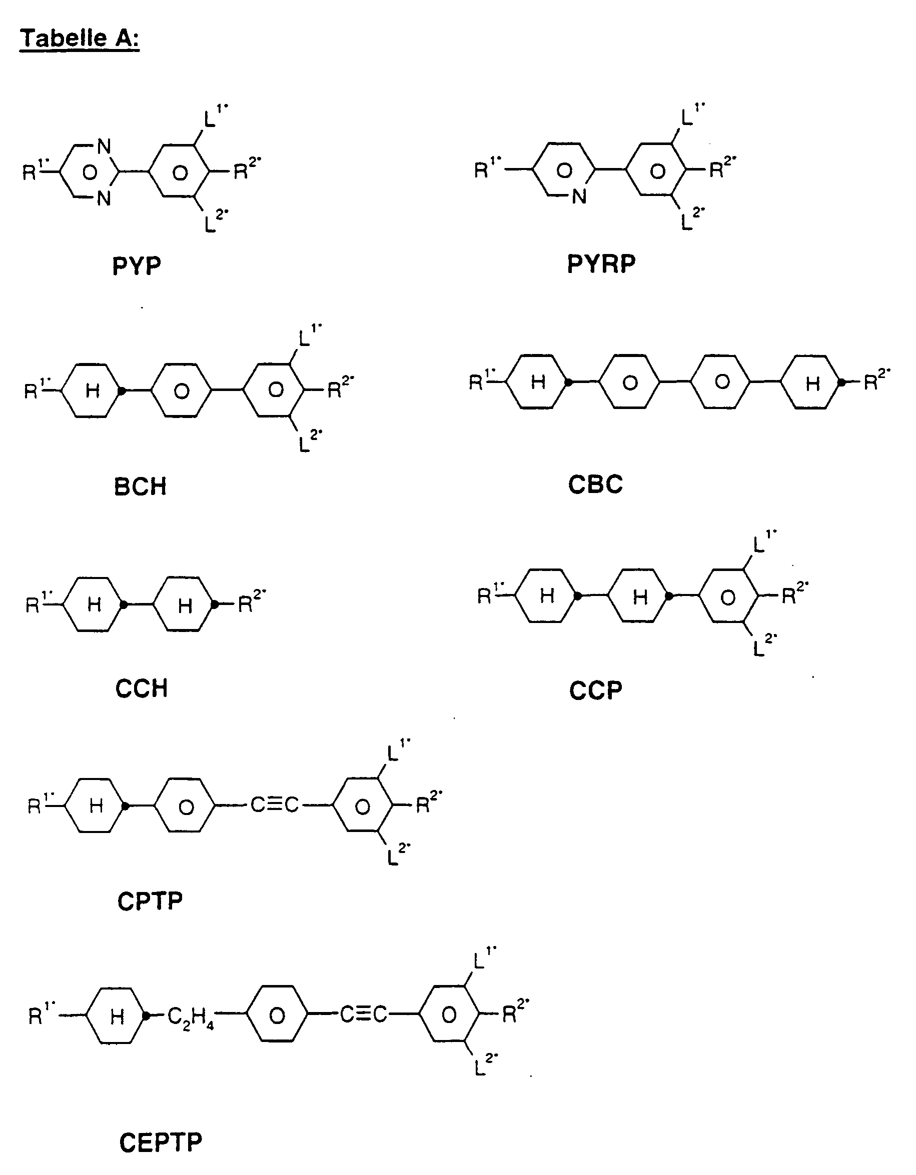

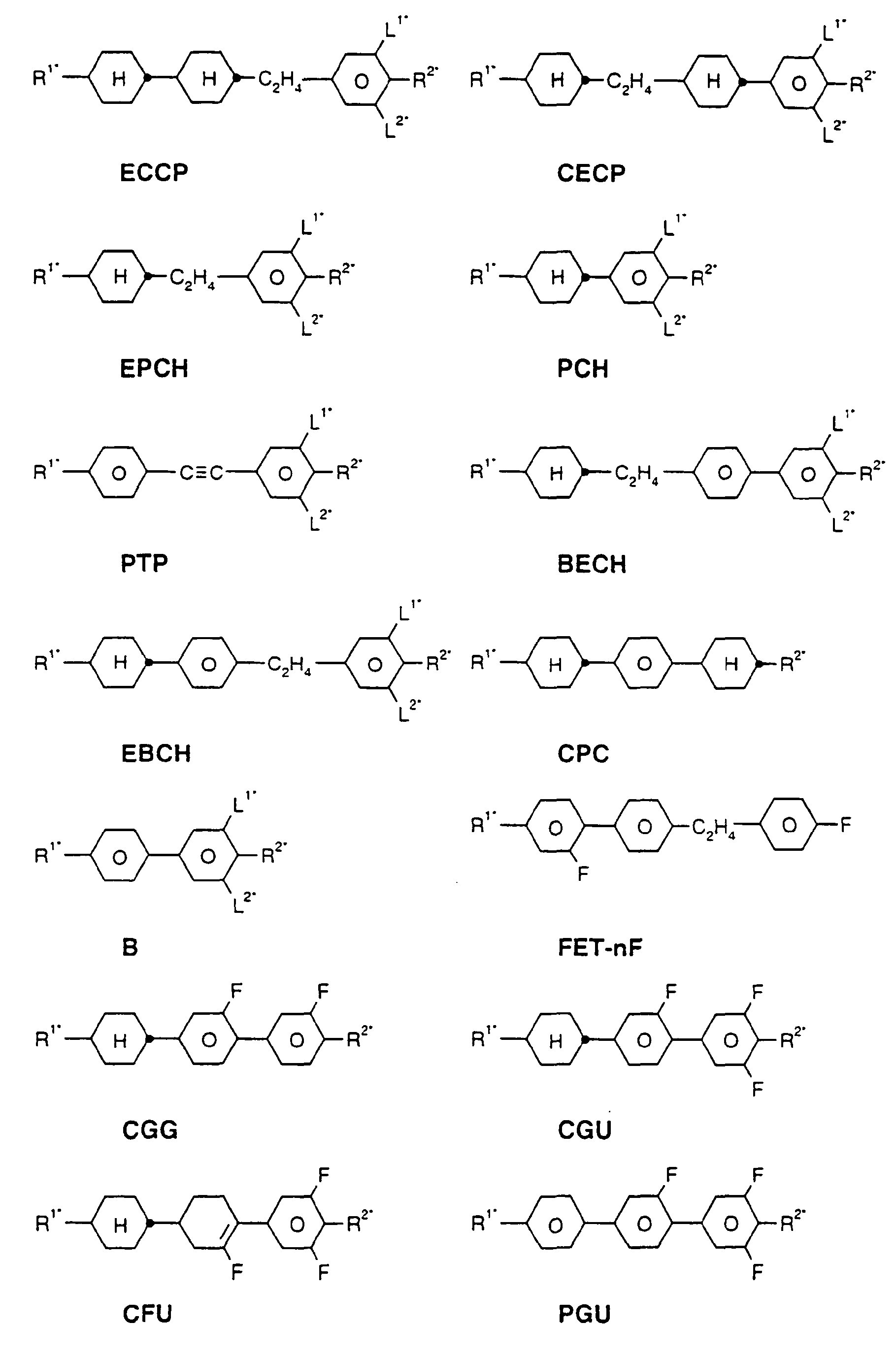

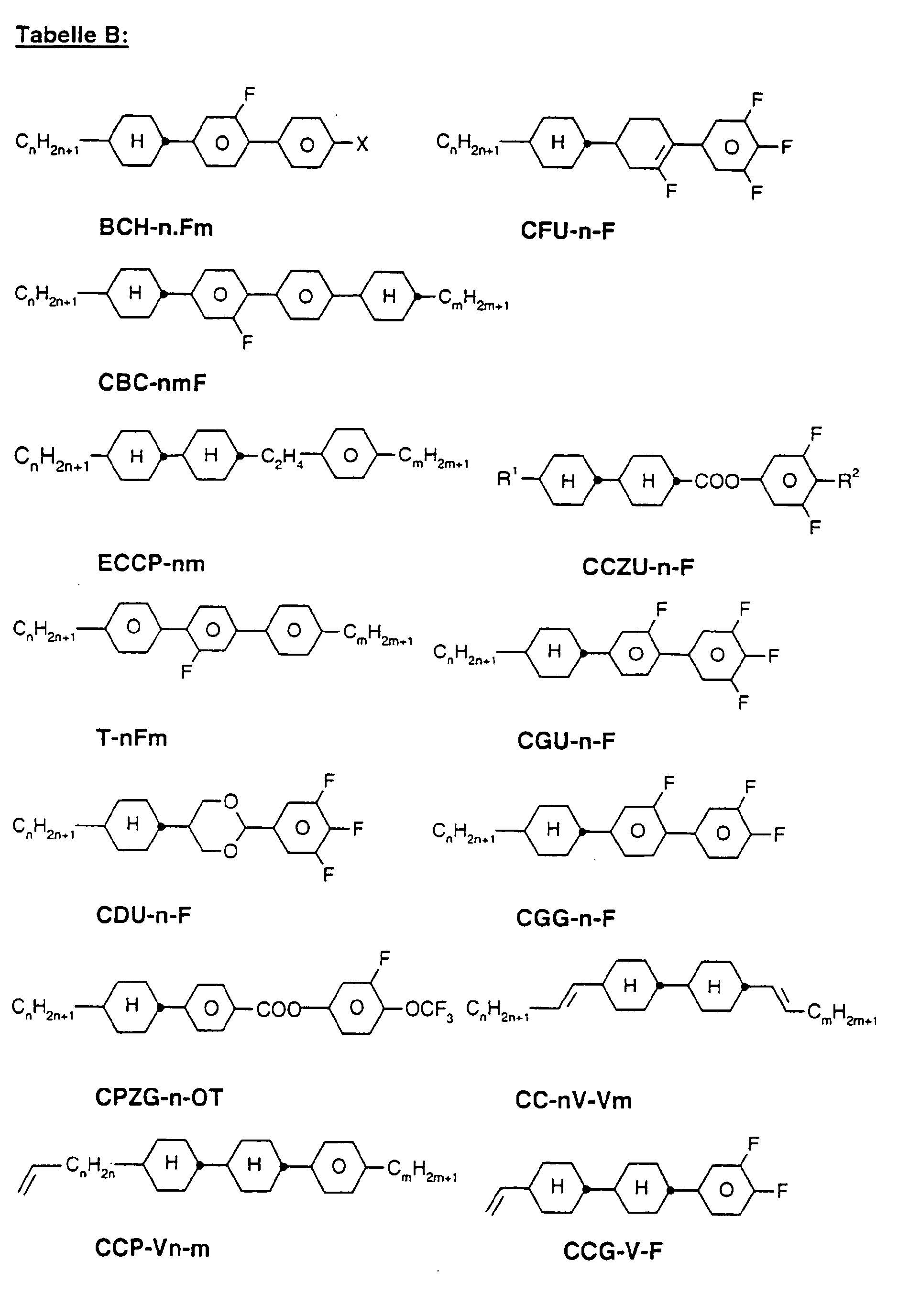

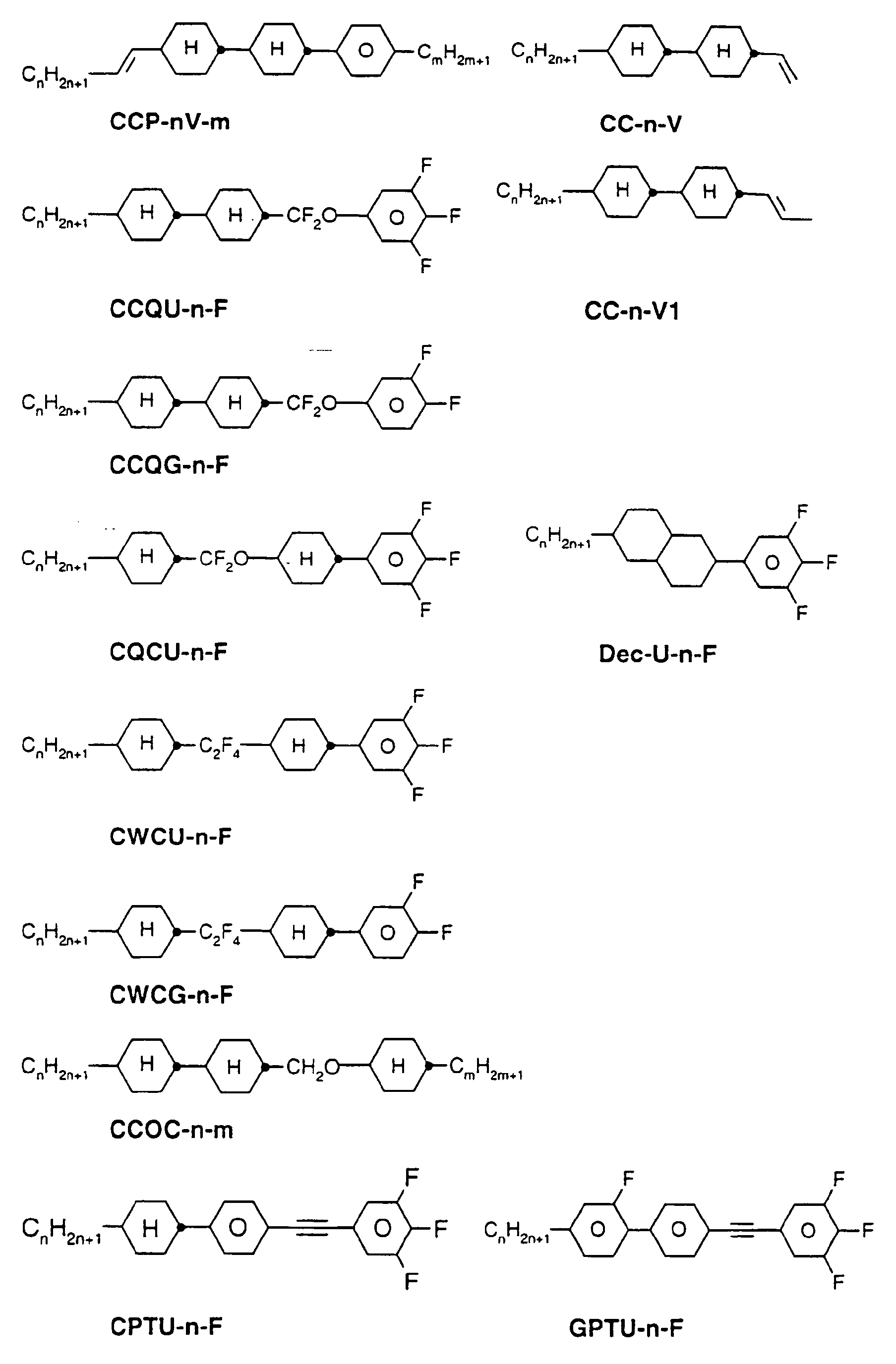

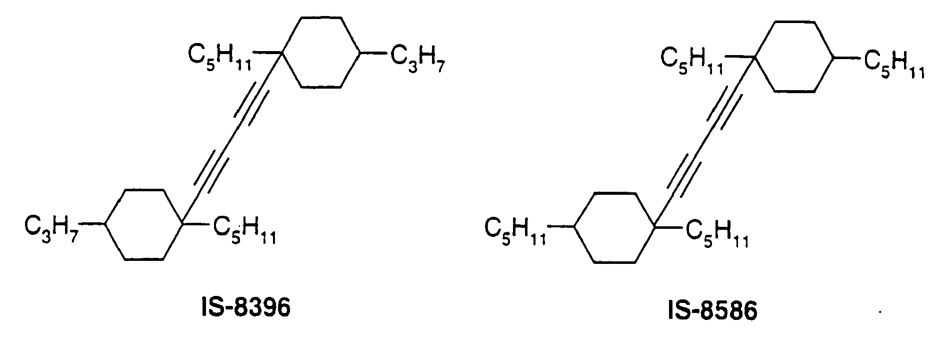

Besonders bevorzugt sind flüsigkristalline Mischungen, die neben den Verbindungen der Formeln I und IA mindestens ein, zwei, drei oder vier Verbindungen aus der Tabelle B enthalten.

**Tabelle C:**

| | |
|---|---|
| In der Tabelle C werden mögliche Dotierstoffe angegeben, die in der Regel den erfindungsgemäßen Mischungen zugesetzt werden. | |
| 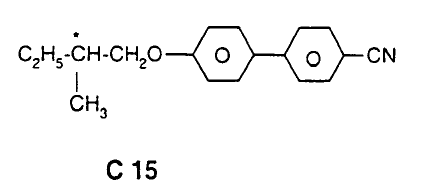 | 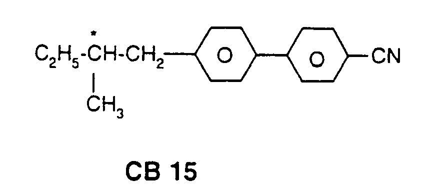 |
| 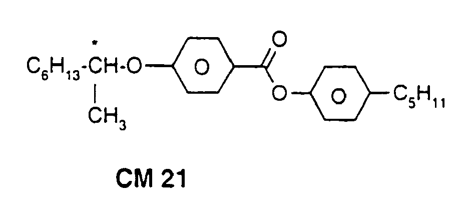 | |
| 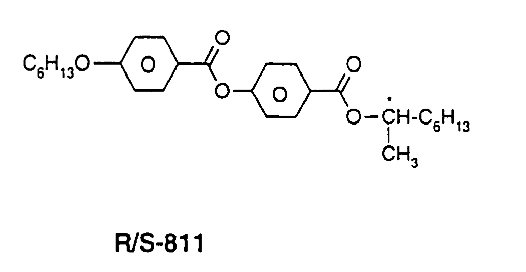 | |
| 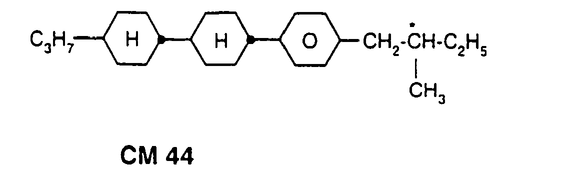 | |
| 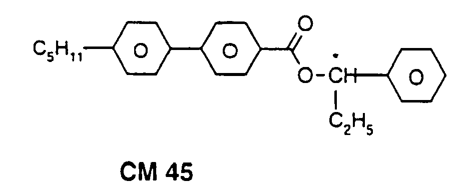 | 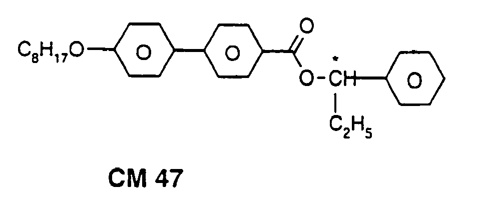 |
| 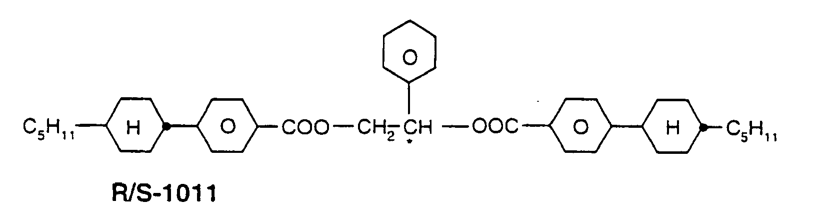 | |
| 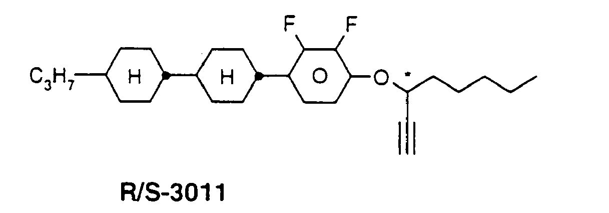 | |
| 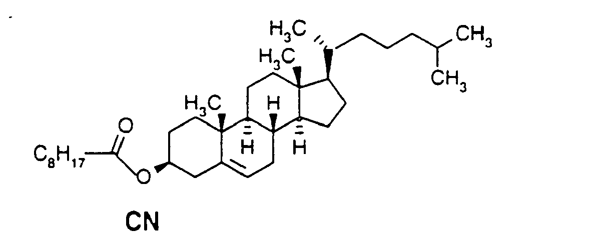 | |
| 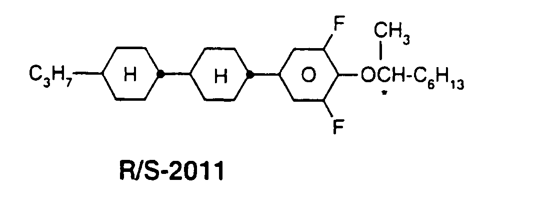 | |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), die Fließviskosität v₂₀ (mm²/sec) und die Rotationsviskosität γ₁ (mPa·s) wurden jeweils bei 20 °C bestimmt.

### Beispiel 1

| | | | |
|---|---|---|---|
| CCH-301 | 9,00 % | S → N [°C]: | -40,0 |
| CCP-2F.F.F | 8,00 % | Klärpunkt [°C]: | +86,5 |
| CCZU-2-F | 4,00 % | Δn [589 nm; 20 °C]: | +0,0594 |
| CCZU-3-F | 14,00 % | d · Δn [µm, 20 °C]: | 0,50 |
| CCZU-5-F | 4,00 % | Verdrillung [°]: | 90 |
| CGU-2-F | 6,00 % | V₁₀ [V]: | 1,51 |
| CCOC-3-3 | 3,00 % | Voltage Holding Ratio (20 °C): | 99,0 % |
| CCOC-3-5 | 2,00 % | | |
| CCOC-4-3 | 4,00 % | | |
| CCPC-34 | 2,00 % | | |
| CCPC-35 | 3,00 % | | |
| IS-8396 | 5,00 % | | |
| IS-8586 | 6,00 % | | |
| CCQU-2-F | 10,00 % | | |
| CCQU-3-F | 12,00 % | | |
| CCQU-5-F | 8,00 % | | |

### Beispiel 2

| | | | |
|---|---|---|---|
| CCH-501 | 5.00% | S → N [°C]: | < -40,0 |
| CCP-2F.F.F | 8,00 % | Klärpunkt [°C]: | +81,0 |
| CCP-2F.F.F | 10,00 % | Δn [589 nm; 20 °C]: | +0,0600 |
| CCZU-2-F | 4,00 % | Δε [1 kHz; 20 °C]: | 12,7 |
| CCZU-3-F | 14,00 % | d · △n [µm, 20 °C]: | 0,50 |
| CCZU-5-F | 4,00 % | Verdrillung [°]: | 90 |
| CGU-2-F | 5,00 % | V₁₀ [V]: | 1,38 |
| CCOC-3-3 | 3,00 % | Voltage Holding Ratio (20°C): | 98,8 % |
| CCOC-3-5 | 3,00% | | |
| CCOC-4-3 | 4,00 % | | |
| IS-8396 | 5,00 % | | |
| IS-8586 | 5,00 % | | |
| CCQU-2-F | 10,00 % | | |
| CCQU-3-F | 12,00 % | | |
| CCQU-5-F | 8,00 % | | |

## Patentansprüche

1. Flüssigkristallines Medium auf der Basis eines Gemisches von polaren Verbindungen mit positiver dielektrischer Anisotropie, **dadurch gekennzeichnet, daß** es eine oder mehrere Alkenylverbindungen der Formel I 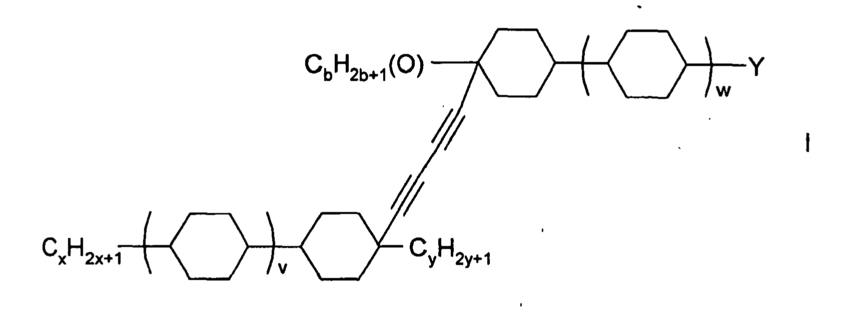 und
eine oder mehrere Verbindungen der Formel IA 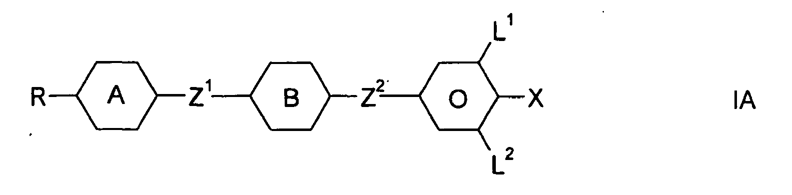 enthält,
worin die einzelnen Reste folgende Bedeutungen besitzen:
a, b, x und y jeweils unabhängig voneinander 0 bis 10,
v 0 oder 1,
w 0
R einen halogenierten oder unsubstituierten Alkylrest mit bis zu 12 C-Atomen, wobei in diesen Resten auch eine oder mehrere CH₂-Gruppen jeweils unabhängig voneinander durch -CH=CH-, -C≡C-, -O-, -CO-O- oder -O-CO- so ersetzt sein können, daß O-Atome nicht direkt miteinander verknüpft sind,
X F, Cl, CN, SF₅, halogenierter Alkylrest, halogenierter Alkenylrest, halogenierter Alkoxyrest oder halogenierter Alkenyloxyrest mit bis zu 6 C-Atomen,
Y CₐH₂ₐ₊₁, CF₃, OCF₃, OCHF₂, CF₂CHFCF₃, SF₅, F oder Cl,
Z¹ und Z² jeweils unabhängig voneinander -CF₂O- oder eine Einfachbindung, wobei Z¹ ≠ Z² ist, 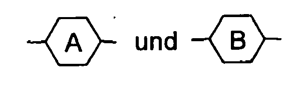 jeweils unabhängig voneinander 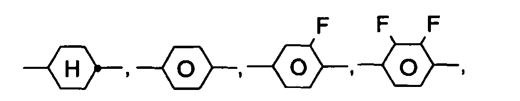 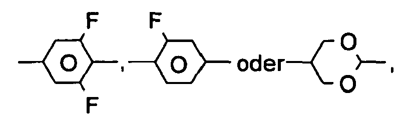 und
L¹ und L² unabhängig voneinander H oder F.

2. Medium nach Anspruch 1, **dadurch gekennzeichnet, daß** es eine oder mehrere Verbindungen der Formeln IA1-IA11 enthält, 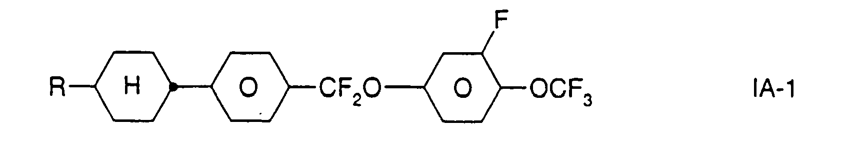 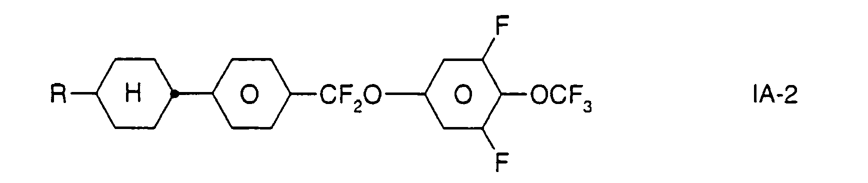 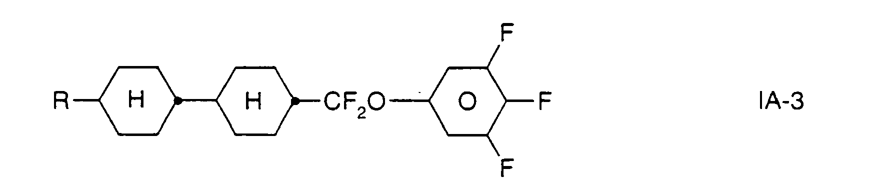 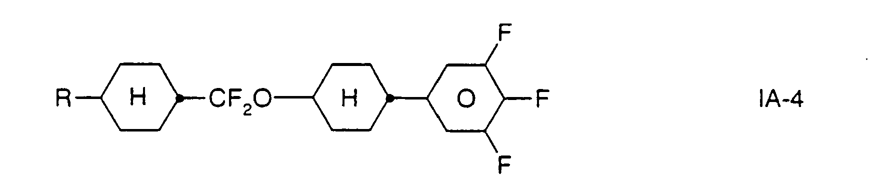 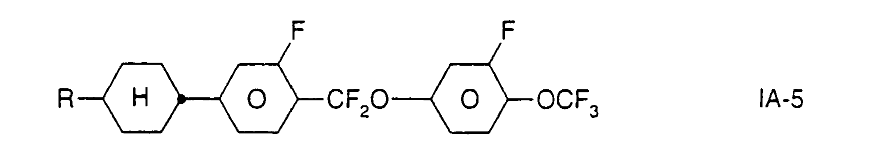 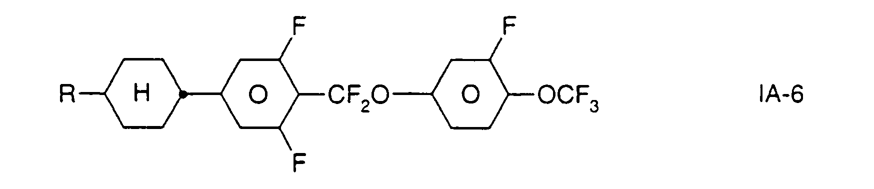 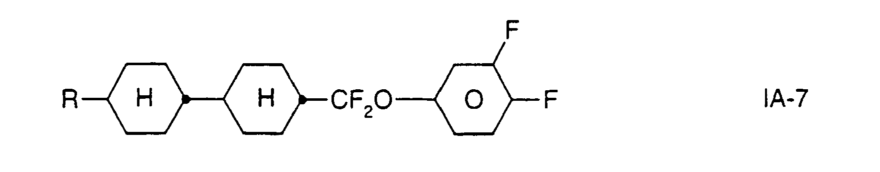 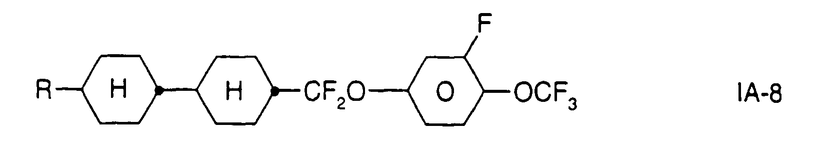 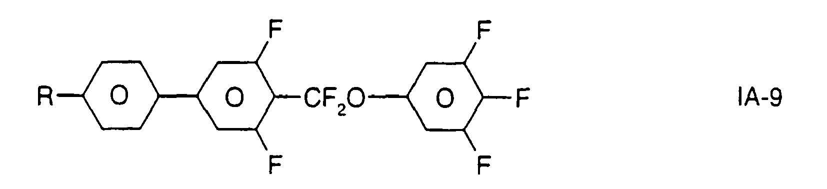 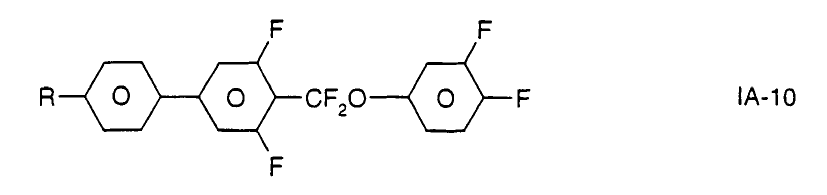 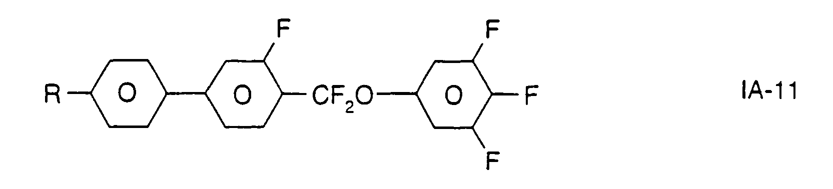 worin R die in Anspruch 1 angegebenen Bedeutungen hat.

3. Medium nach Anspruch 1 oder 2, **dadurch gekennzeichnet, daß** es zusätzlich eine oder mehrere Verbindungen ausgewählt aus der Gruppe bestehend aus den allgemeinen Formeln II, III, IV, V und VI enthält: 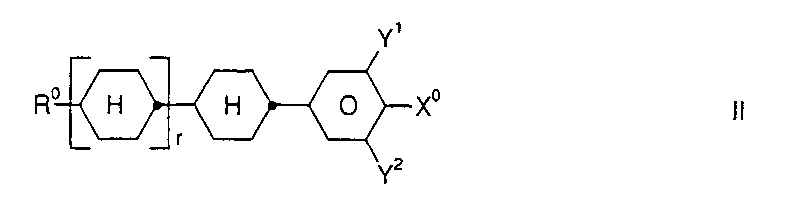 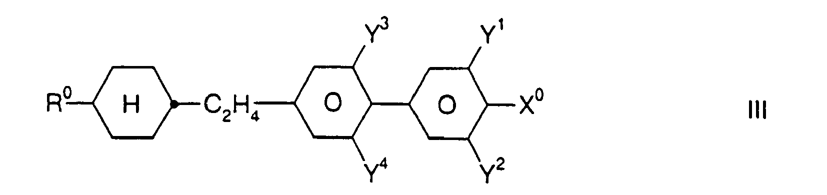 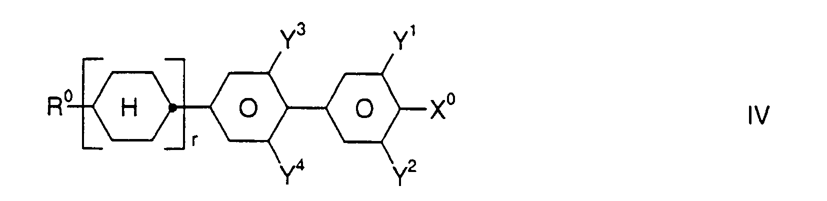 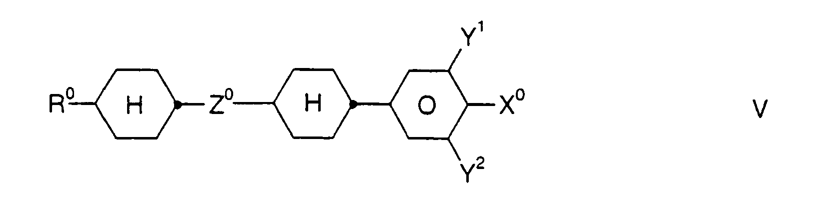 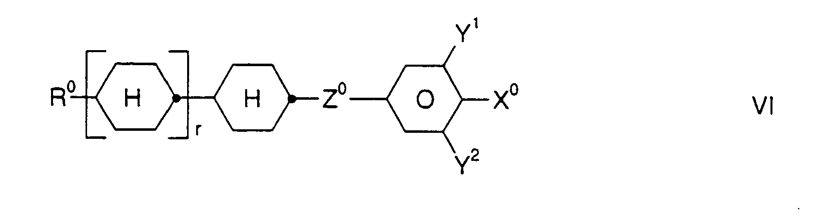 worin die einzelnen Reste die folgenden Bedeutungen haben:
R⁰ n-Alkyl, Oxaalkyl, Fluoralkyl, Alkenyl oder Alkenyloxy mit jeweils bis zu 9 C-Atomen,
X⁰ F, Cl, halogeniertes Alkyl, Alkenyl oder Alkoxy mit bis zu 6 C-Atomen,
Z⁰ -C₂F₄-, -C₂H₄-, -(CH₂)₄-, -C₂F₄-, -CF=CF-, -OCH₂- oder -CH₂O-,
Y¹ und Y² jeweils unabhängig voneinander H oder F,
r 0 oder 1.

4. Medium nach Anspruch 3, **dadurch gekennzeichnet, daß** der Anteil an Verbindungen der Formeln IA und I bis VI zusammen im Gesamtgemisch mindestens 50 Gew.-% beträgt.

5. Medium nach mindestens einem der Ansprüche 1 bis 4, **dadurch gekennzeichnet, daß** es zusätzlich eine oder mehrere Verbindungen der Formel XIII enthält, 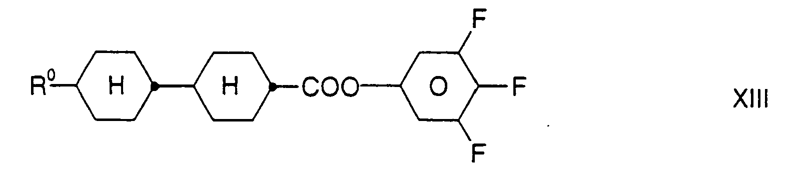 worin R⁰ die in Anspruch 3 angegebenen Bedeutungen hat.

6. Medium nach mindestens einem der Ansprüche 1 bis 5, **dadurch gekennzeichnet, daß** es eine oder mehrere Verbindungen der Formeln IIa bis IIg 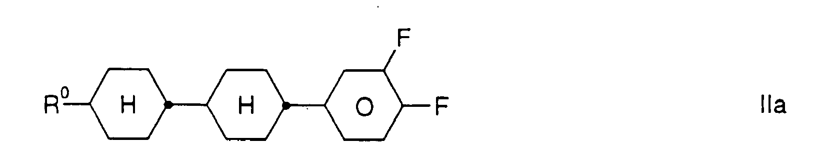 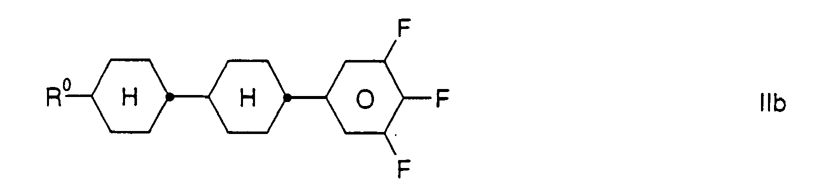 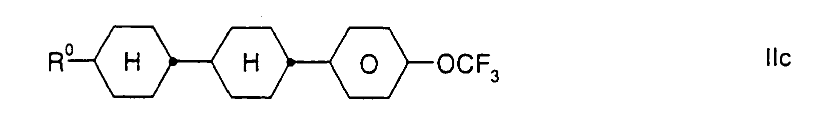 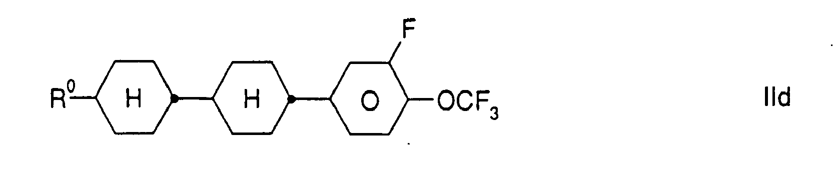 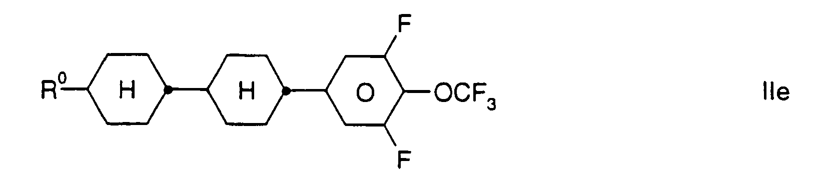 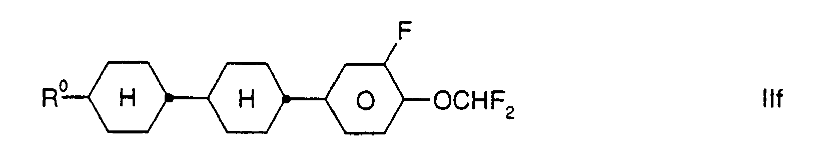 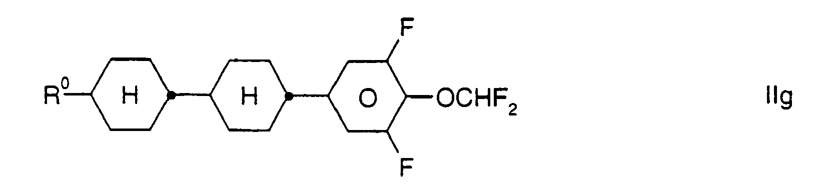 enthält,
worin R⁰ und Y² die in Anspruch 3 angegebenen Bedeutungen haben.

7. Medium nach mindestens einem der Ansprüche 1 bis 6, **dadurch gekennzeichnet, daß** es zusätzlich eine oder mehrere Verbindungen der Formeln 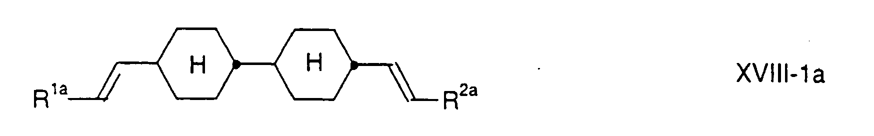 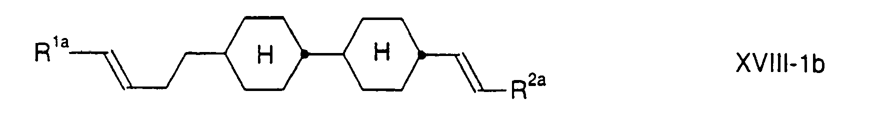 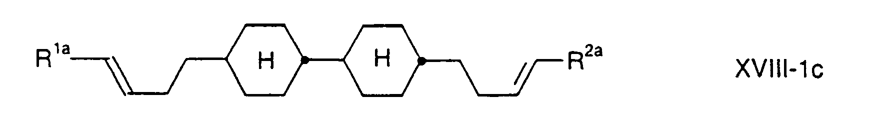 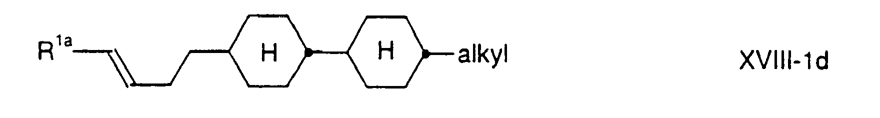 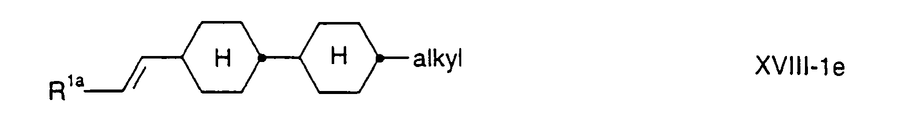 worin
R^{1a} und R^{2a} jeweils unabhängig voneinander H, CH₃, C₂H₅ oder n-C₃H₇ und alkyl eine Alkylgruppe mit 1 bis 7 C-Atomen
bedeuten,
enthält.

8. Medium nach mindestens einem der Ansprüche 1 bis 7, **dadurch gekennzeichnet, daß** es eine oder mehrere Verbindungen der Formeln IA-3 und/oder IA-4 enthält, 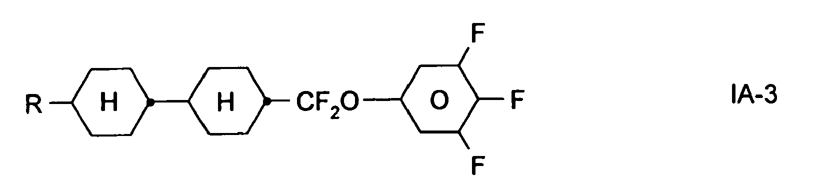 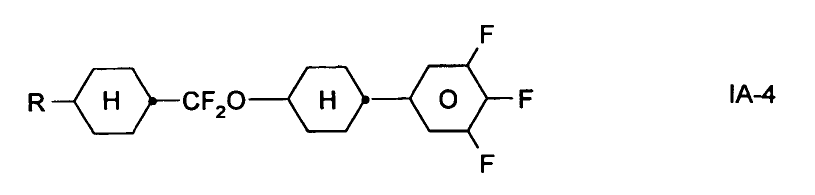 worin R die in Anspruch 1 angegebene Bedeutung hat.

9. Medium nach Anspruch 8, **dadurch gekennzeichnet, daß** es eine oder mehrere Verbindungen der Formel IA-3 enthält, 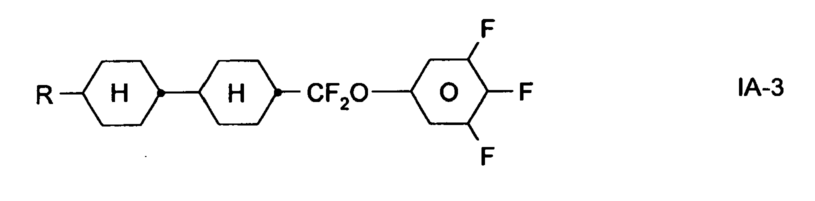 worin R die in Anspruch 1 angegebene Bedeutung hat.

10. Medium nach mindestens einem der Ansprüche 1 bis 9, **dadurch gekennzeichnet, daß** es eine oder mehrere Verbindungen der Formel 11 enthält, 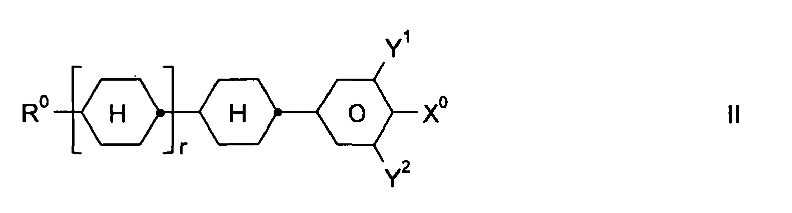 worin die einzelnen Reste jeweils die in Anspruch 3 angegebenen Bedeutungen haben.

11. Medium nach Anspruch 10, **dadurch gekennzeichnet, daß** es eine oder mehrere Verbindungen der Formel IIb enthält, 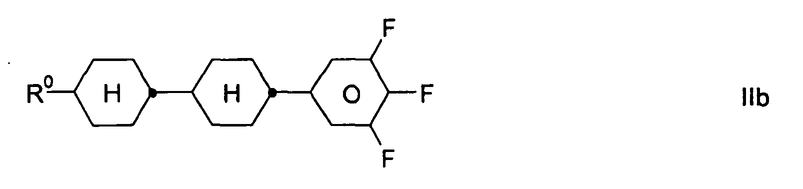 worin die R⁰ die in Anspruch 10 angegebene Bedeutung hat.

12. Medium nach mindestens einem der Ansprüche 1 bis 11, **dadurch gekennzeichnet, daß** es eine oder mehrere Verbindungen der Formel O1 enthält, 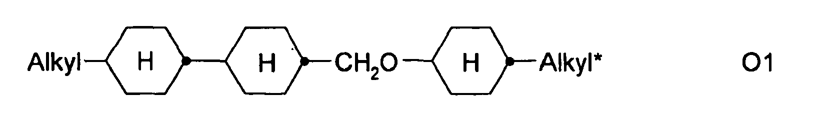 worin Alkyl und Alkyl* jeweils unabhängig voneinander eine Alkylgruppe mit 1-7 Kohlenstoffatomen bedeuten.

13. Medium nach mindestens einem der Ansprüche 1 bis 12 , **dadurch gekennzeichnet, daß** der Anteil an Verbindungen der Formel IA im Gesamtgemisch 10 bis 50 Gew.-% beträgt.

14. Verwendung des flüssigkristallinen Mediums nach mindestens einem der Ansprüche 1 bis 13 für elektrooptische Zwecke.

15. Elektrooptische Flüssigkristallanzeige enthaltend ein flüssigkristallines Medium nach mindestens einem der Ansprüche 1 bis 13 .

## Claims

1. Liquid-crystalline medium based on a mixture of polar compounds of positive dielectric anisotropy, **characterised in that** it comprises one or more alkenyl compounds of the formula I 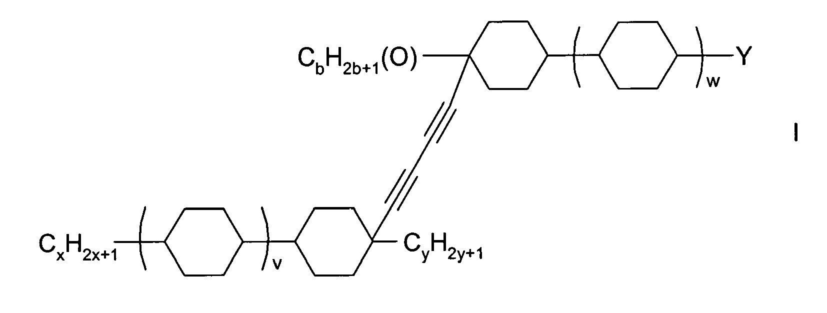 and
one or more compounds of the formula IA 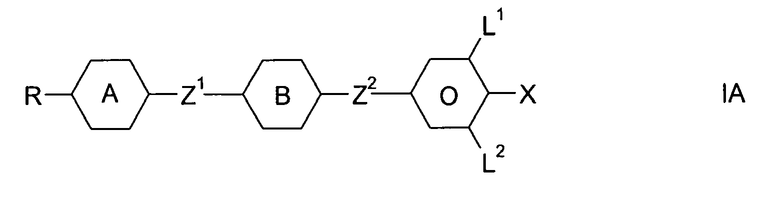 in which the individual radicals have the following meanings:
a, b, x and y each, independently of one another, 0 to 10,
v 0 or 1,
w 0,
R a halogenated or unsubstituted alkyl radical having up to 12 C atoms, where one or more CH₂ groups in these radicals may also be replaced, in each case independently of one another, by -CH=CH-, -C≡C-, -O-, -CO-O- or-O-CO- in such a way that O atoms are not linked directly to one another,
X F, Cl, CN, SF₅, a halogenated alkyl radical, a halogenated alkenyl radical, a halogenated alkoxy radical or a halogenated alkenyloxy radical having up to 6 C atoms,
Y CₐH₂ₐ₊₁, CF₃, OCF₃, OCHF₂, CF₂CHFCF₃, SF₅, F or Cl,
Z¹ and Z² each, independently of one another, -CF₂O- or a single bond, where Z¹ ≠ Z², 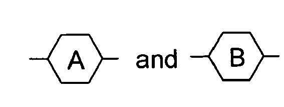 each, independently of one another, 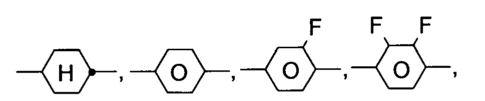 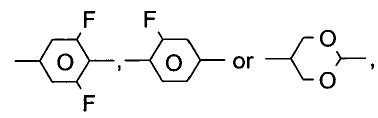 and
L¹ and L² each, independently of one another, H or F.

2. Medium according to Claim 1, **characterised in that** it comprises one or more compounds of the formulae IA1-IA11 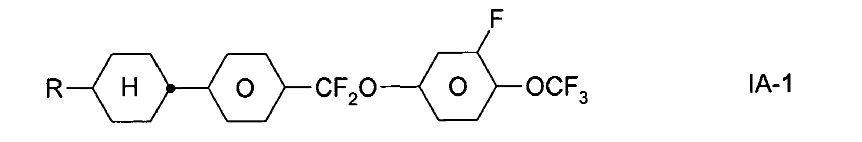 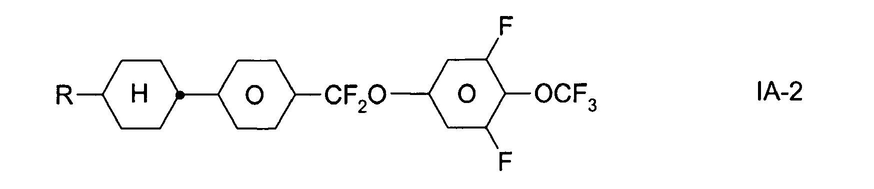 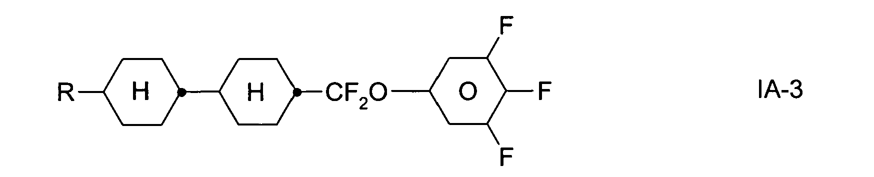 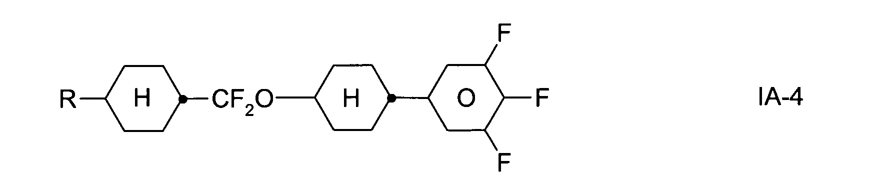 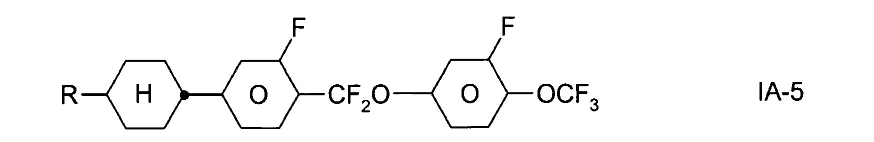 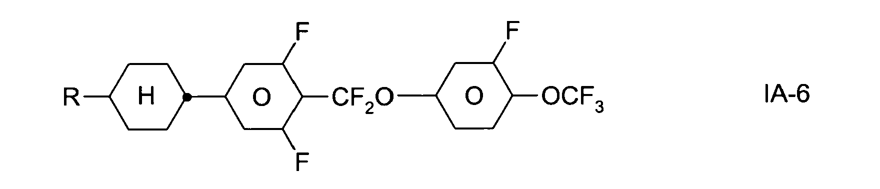 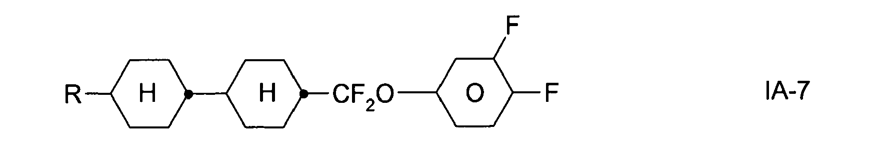 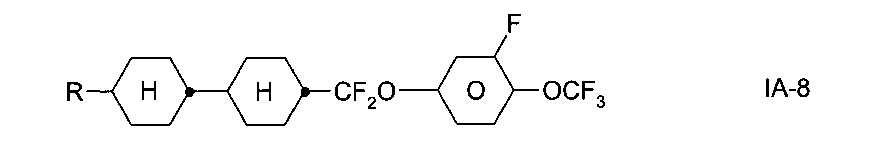 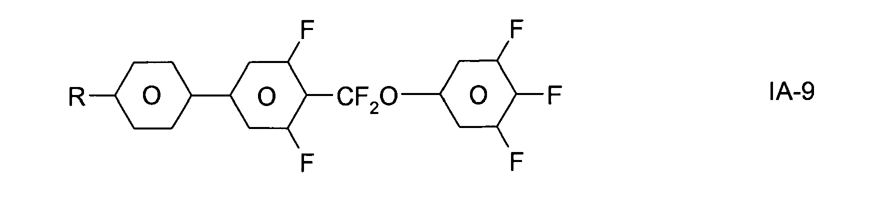 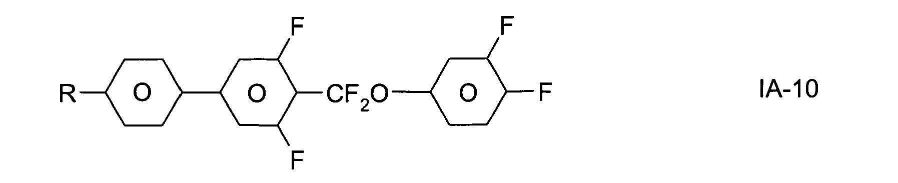 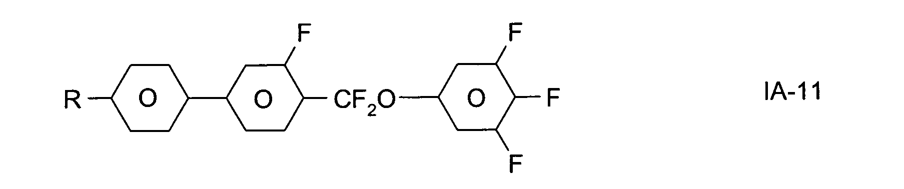 in which R has the meanings indicated in Claim 1.

3. Medium according to Claim 1 or 2, **characterised in that** it additionally comprises one or more compounds selected from the group consisting of the general formulae II, III, IV, V and VI: 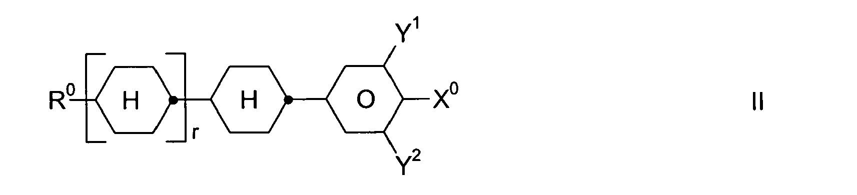 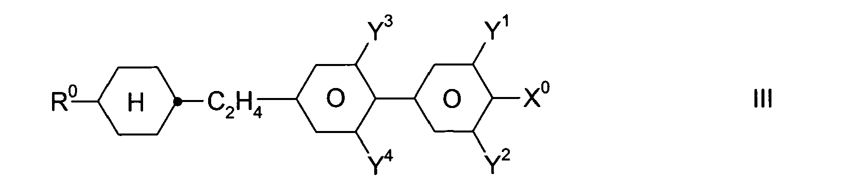 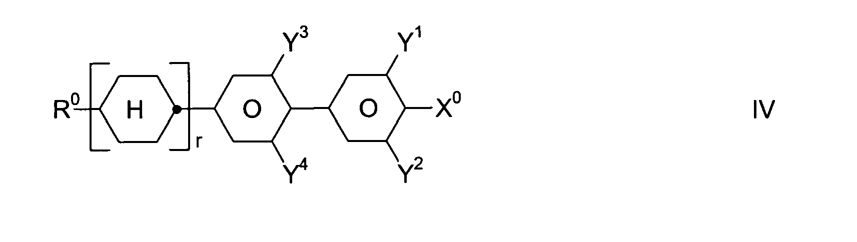 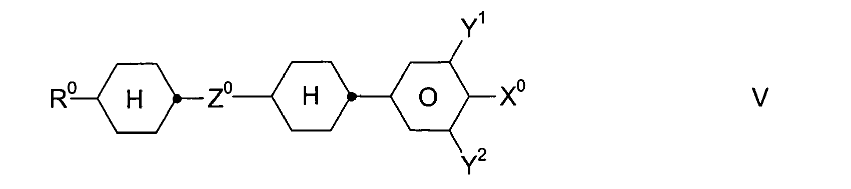 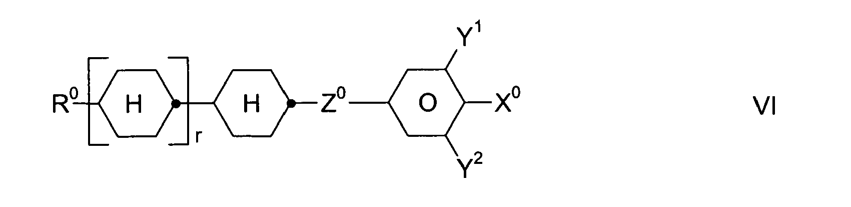 in which the individual radicals have the following meanings:
R⁰ n-alkyl, oxaalkyl, fluoroalkyl, alkenyl or alkenyloxy, each having up to 9 C atoms,
X⁰ F, Cl, halogenated alkyl, alkenyl or alkoxy having up to 6 C atoms,
Z⁰ -C₂F₄-, -C₂H₄-, -(CH₂)₄-, -C₂F₄-, -CF=CF-, -OCH₂- or -CH₂O-,
Y¹ and Y² each, independently of one another, H or F,
r 0 or 1.

4. Medium according to Claim 3, **characterised in that** the proportion of compounds of the formulae IA and I to VI together in the mixture as a whole is at least 50% by weight.

5. Medium according to at least one of Claims 1 to 4, **characterised in that** it additionally comprises one or more compounds of the formula XIII 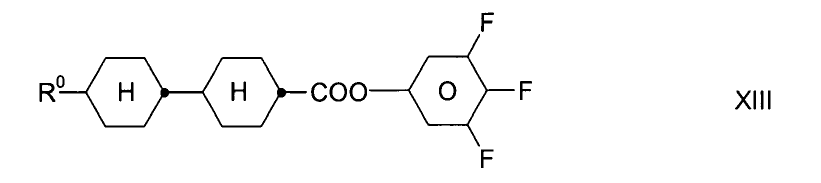 in which R⁰ has the meanings indicated in Claim 3.

6. Medium according to at least one of Claims 1 to 5, **characterised in that** it comprises one or more compounds of the formulae IIa to IIg 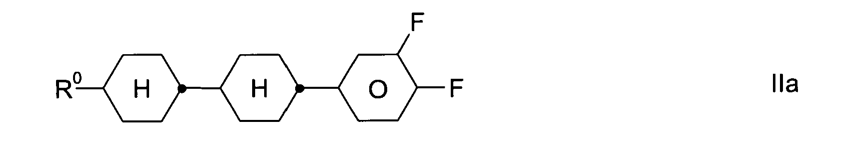 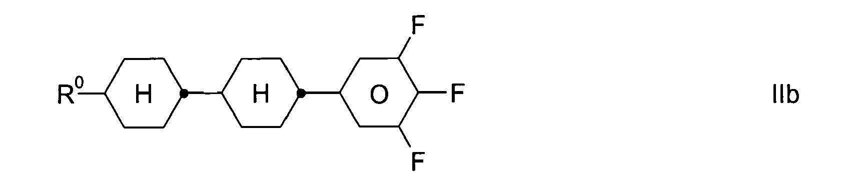 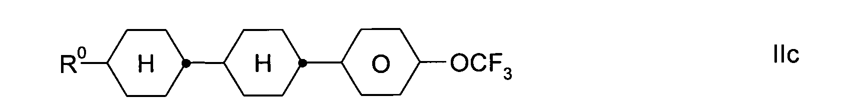 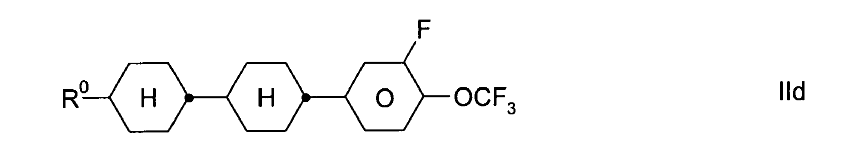 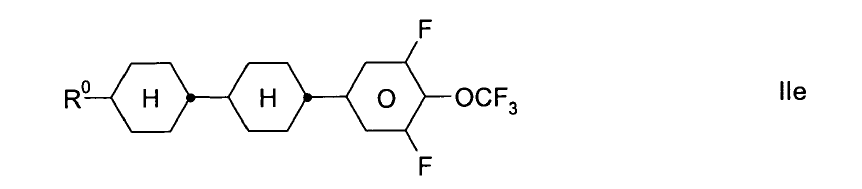 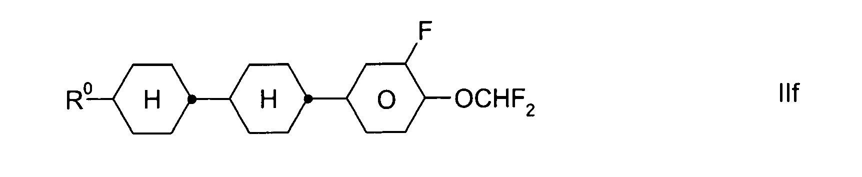 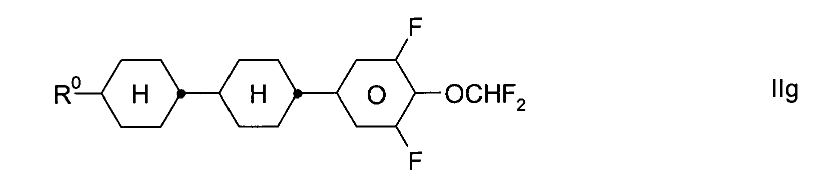 in which R⁰ and Y² have the meanings indicated in Claim 3.

7. Medium according to at least one of Claims 1 to 6, **characterised in that** it additionally comprises one or more compounds of the formulae 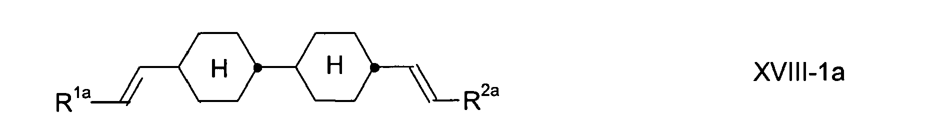 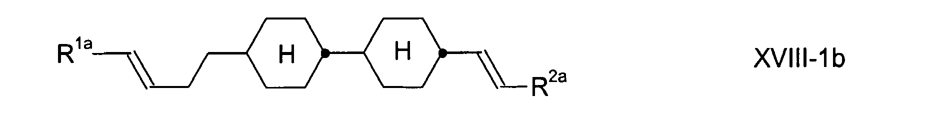 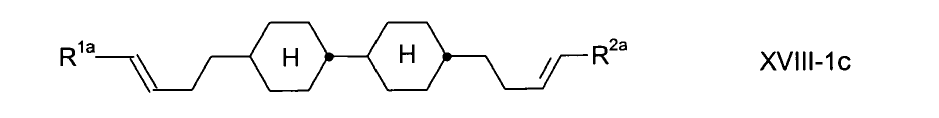 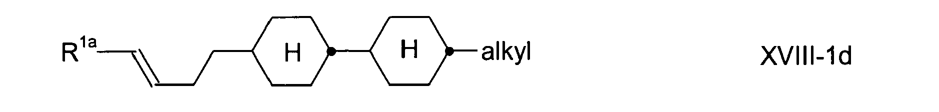 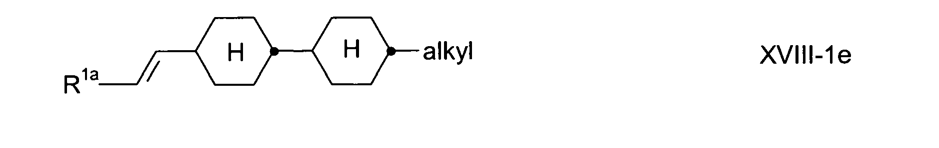 in which
R^{1a} and R^{2a} each, independently of one another, denote H, CH₃, C₂H₅ or n-C₃H₇, and alkyl denotes an alkyl group having 1 to 7 C atoms.

8. Medium according to at least one of Claims 1 to 7, **characterised in that** it comprises one or more compounds of the formulae IA-3 and/or IA-4 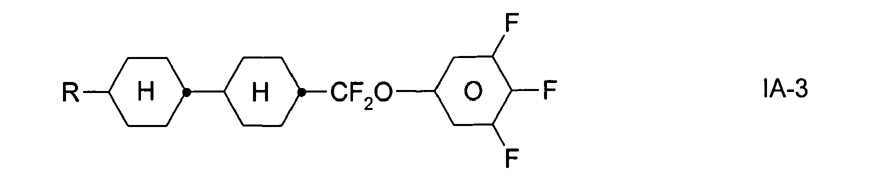 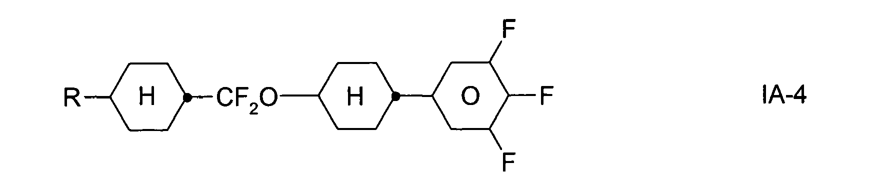 in which R has the meaning indicated in Claim 1.

9. Medium according to Claim 8, **characterised in that** it comprises one or more compounds of the formula IA-3 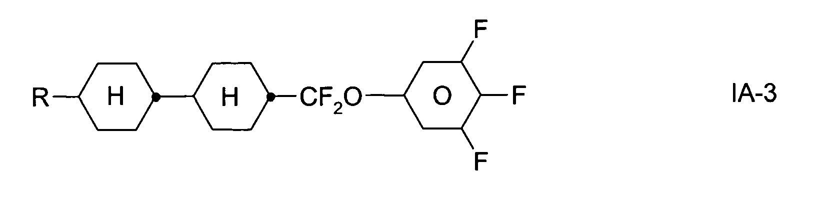 in which R has the meaning indicated in Claim 1.

10. Medium according to at least one of Claims 1 to 9, **characterised in that** it comprises one or more compounds of the formula II 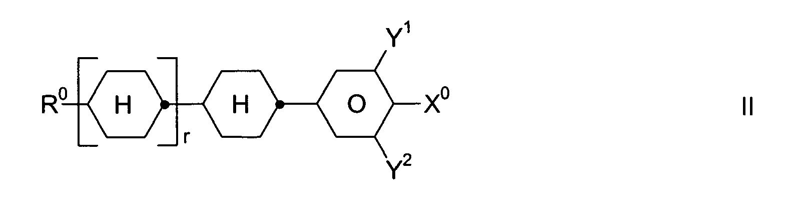 in which the individual radicals each have the meanings indicated in Claim 3.

11. Medium according to Claim 10, **characterised in that** it comprises one or more compounds of the formula IIb 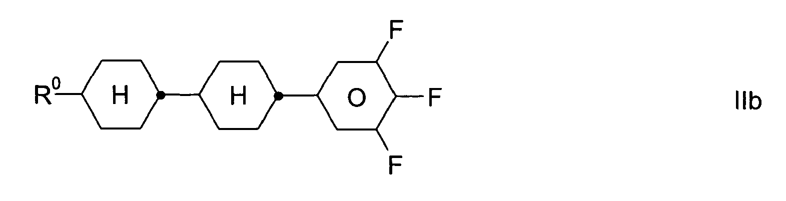 in which R° has the meaning indicated in Claim 10.

12. Medium according to at least one of Claims 1 to 11, **characterised in that** it comprises one or more compounds of the formula O1 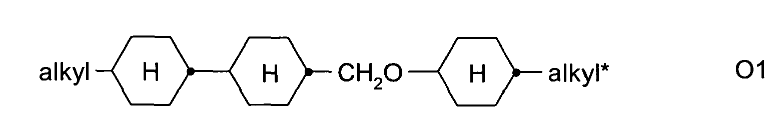 in which alkyl and alkyl* each, independently of one another, denote an alkyl group having 1-7 carbon atoms.

13. Medium according to at least one of Claims 1 to 12, **characterised in that** the proportion of compounds of the formula IA in the mixture as a whole is 10 to 50% by weight.

14. Use of the liquid-crystalline medium according to at least one of Claims 1 to 13 for electro-optical purposes.

15. Electro-optical liquid-crystal display containing a liquid-crystalline medium according to at least one of Claims 1 to 13.

## Revendications

1. Milieu cristallin liquide basé sur un mélange de composés polaires d'anisotropie diélectrique positive, **caractérisé en ce qu'**il comprend un ou plusieurs composés alkényle de la formule I 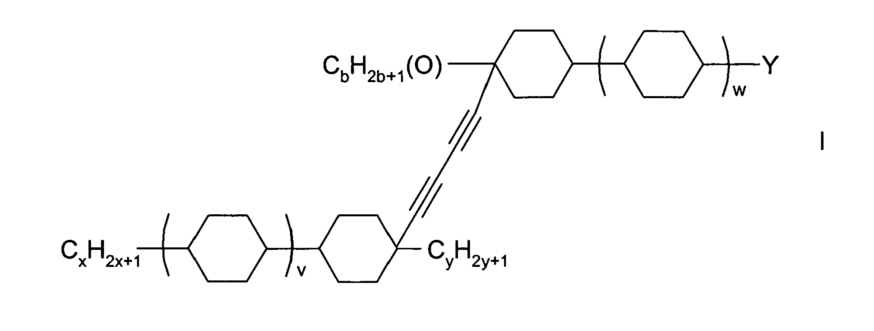 et
un ou plusieurs composés de la formule IA 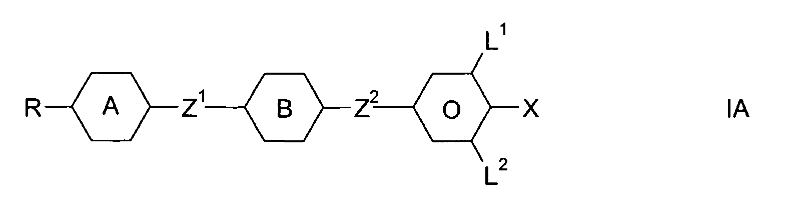 dans lesquelles les radicaux individuels présentent les significations qui suivent:
a, b, x et y chacun, indépendamment les uns des autres, 0 à 10,
v 0 ou 1,
w 0,
R un radical alkyle halogéné ou non substitué comportant jusqu'à 12 atomes de C, où un ou plusieurs groupes CH₂ dans ces radicaux peuvent également être remplacés, dans chaque cas indépendamment les uns des autres, par -CH=CH-, -C≡C-, -O-, -CO-O- ou-O-CO- de telle sorte que des atomes de O ne soient pas liés directement les uns aux autres,
X F, Cl, CN, SF₅, un radical alkyle halogéné, un radical alkényle halogéné, un radical alcoxy halogéné ou un radical alkényloxy halogéné comportant jusqu'à 6 atomes de C,
Y CₐH₂ₐ₊₁, CF₃, OCF₃, OCHF₂, CF₂CHFCF₃, SF₅, F ou CI,
Z¹ et Z² chacun, indépendamment de l'autre, -CF₂O- ou une liaison simple, où Z¹ ≠ Z², 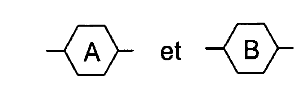 chacun, indépendamment de l'autre, 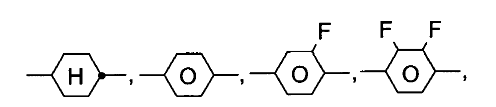 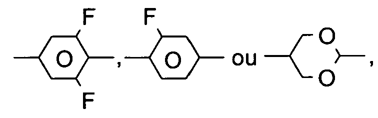 et
L¹ et L² chacun, indépendamment de l'autre, H ou F.

2. Milieu selon la revendication 1, **caractérisé en ce qu'**il comprend un ou plusieurs composés des formules IA1-IA11 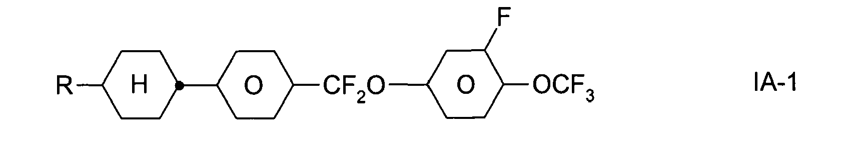 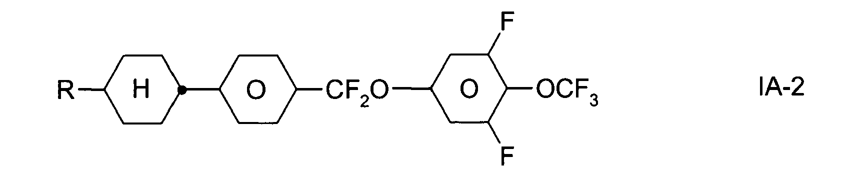 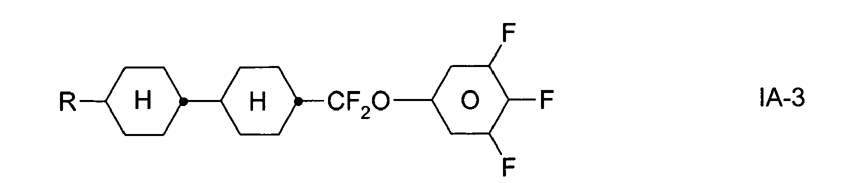 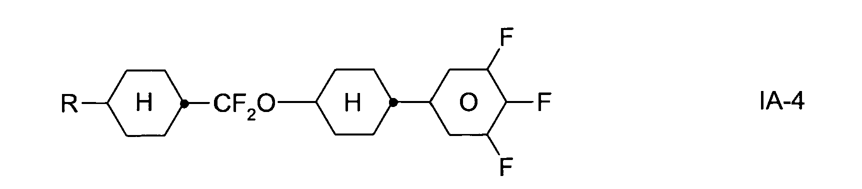 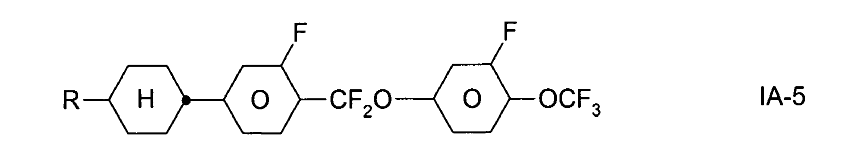 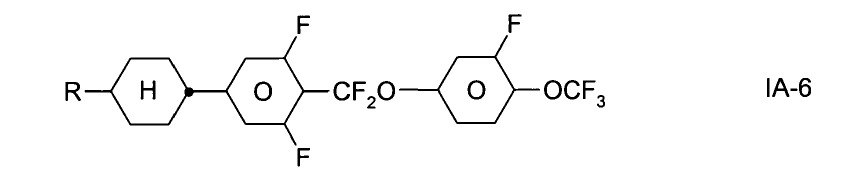 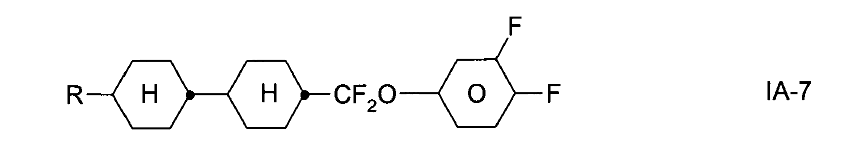 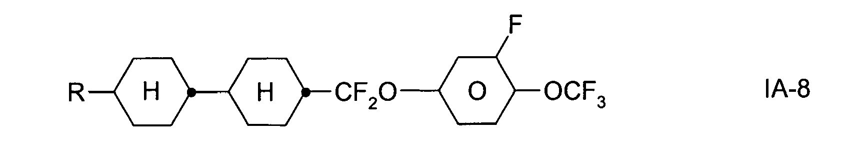 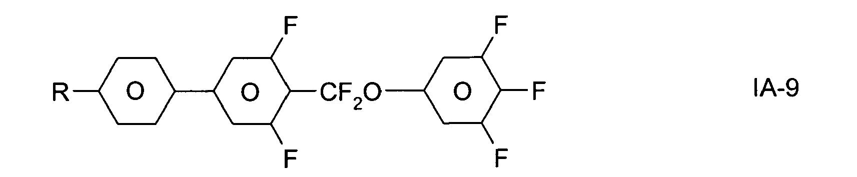 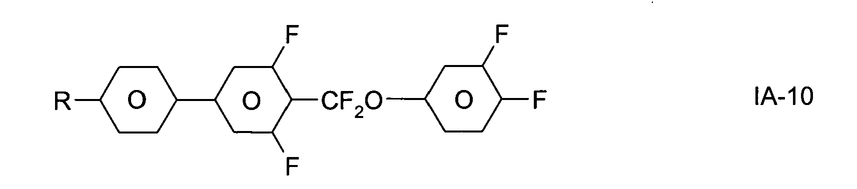 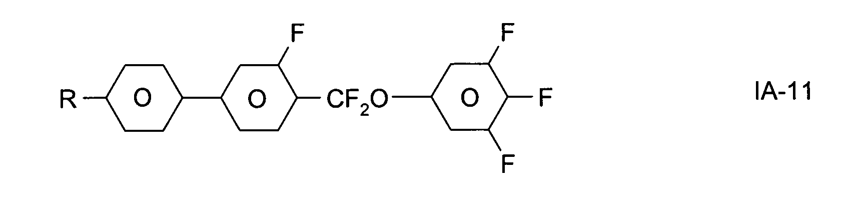 dans lesquelles R présente les significations indiquées dans la revendication 1.

3. Milieu selon la revendication 1 ou 2, **caractérisé en ce qu'**il comprend additionnellement un ou plusieurs composés choisis parmi le groupe constitué par les formules générales II, III, IV, V et VI: 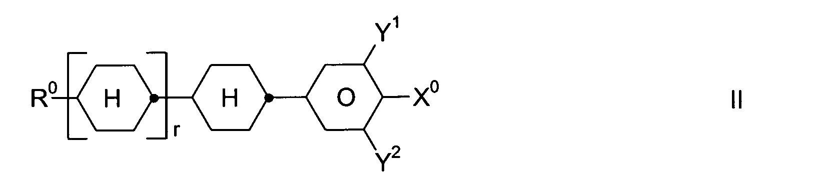 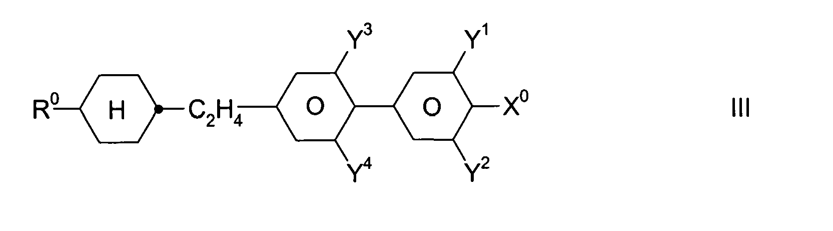 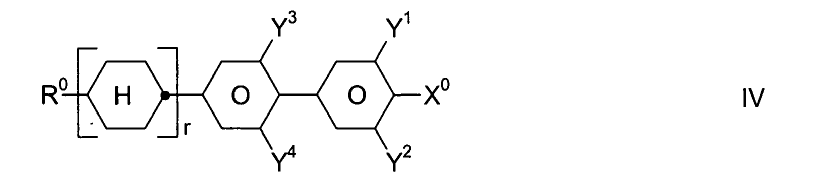 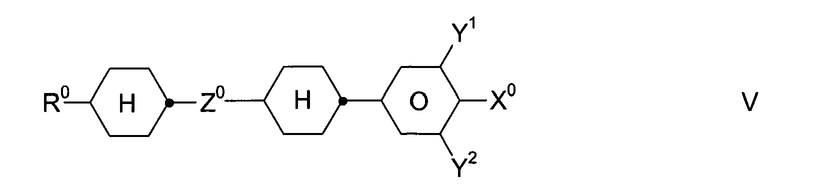 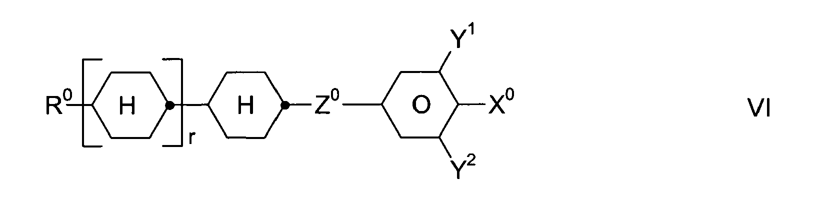 dans lesquelles les radicaux individuels présentent les significations qui suivent :
R⁰ n-alkyle, oxaalkyle, fluoroalkyle, alkényle ou alkényloxy, dont chacun comporte jusqu'à 9 atomes de C,
X⁰ F, Cl, alkyle halogéné, alkényle ou alcoxy comportant jusqu'à 6 atomes de C,
Z⁰ -C₂F₄-, -C₂H₄-, -(CH₂)₄-, -C₂F₄-, -CF=CF-, -OCH₂- ou -CH₂O-,
Y¹ et Y² chacun, indépendamment de l'autre, H ou F,
r 0 ou 1.

4. Milieu selon la revendication 3, **caractérisé en ce que** la proportion de composés des formules IA et I à VI ensemble dans le mélange pris dans sa globalité est d'au moins 50% en poids.

5. Milieu selon au moins l'une des revendications 1 à 4, **caractérisé en ce qu'**il comprend additionnellement un ou plusieurs composés de la formule XIII 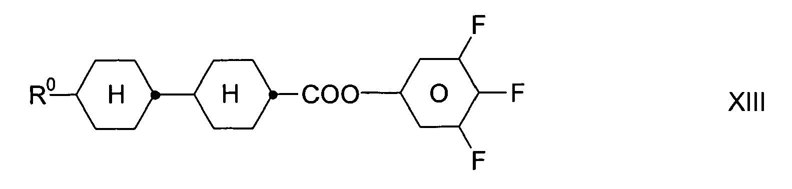 dans laquelle R⁰ présente les significations indiquées dans la revendication 3.

6. Milieu selon au moins l'une des revendications 1 à 5, **caractérisé en ce qu'**il comprend un ou plusieurs composés des formules IIa à IIg 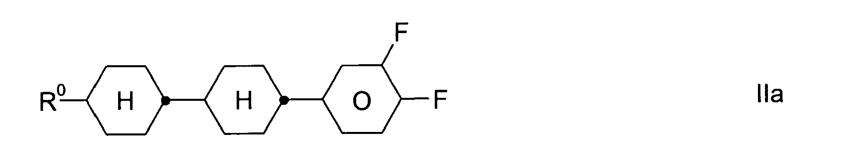 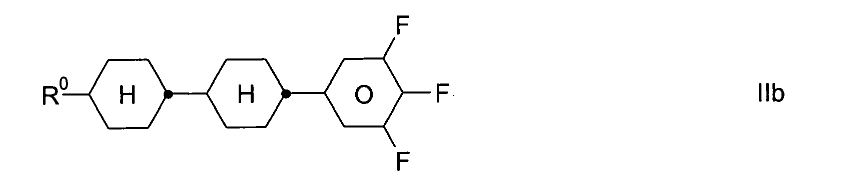 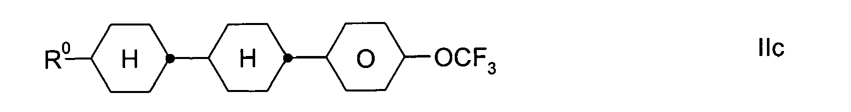 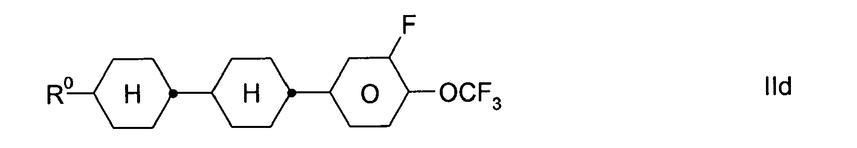 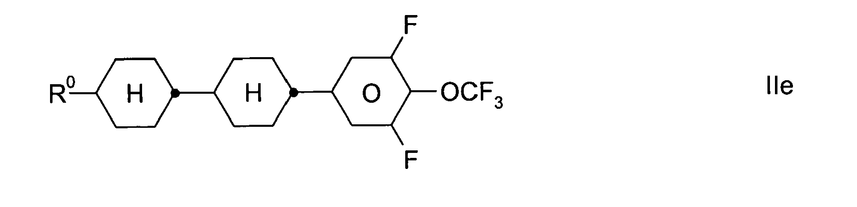 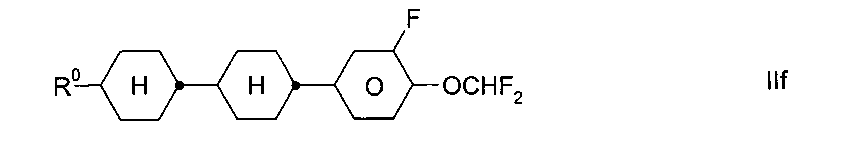 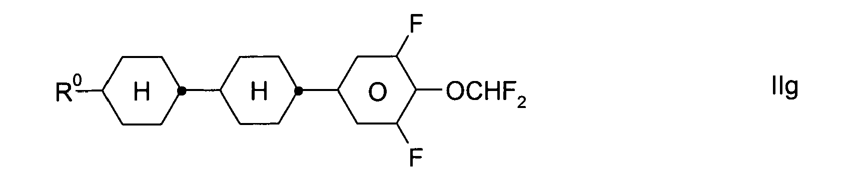 dans lesquelles R⁰ et Y² présentent les significations indiquées dans la revendication 3.

7. Milieu selon au moins l'une des revendications 1 à 6, **caractérisé en ce qu'**il comprend additionnellement un ou plusieurs composés des formules 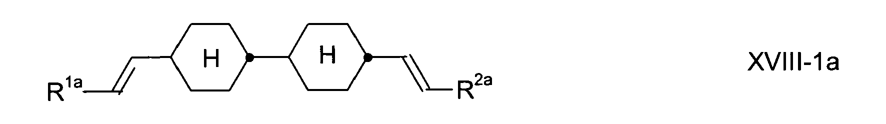 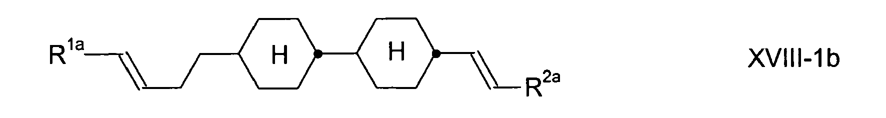 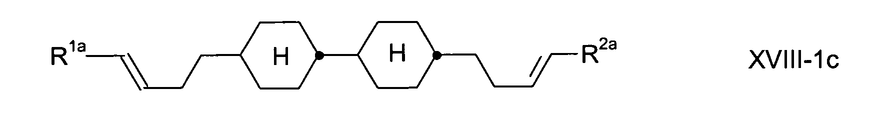 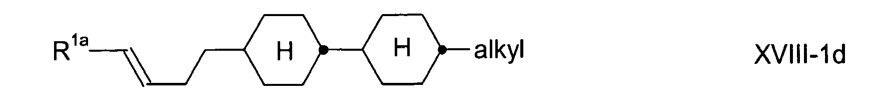 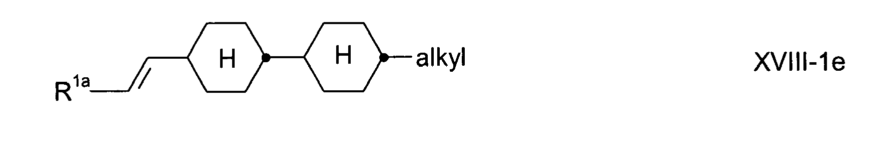 dans lesquelles
R^{1a} et R^{2a} chacun, indépendamment de l'autre, représente H, CH₃, C₂H₅ ou n-C₃H₇, et alkyl représente un groupe alkyle comportant de 1 à 7 atomes de C.

8. Milieu selon au moins l'une des revendications 1 à 7, **caractérisé en ce qu'**il comprend un ou plusieurs composés des formules IA-3 et/ou IA-4 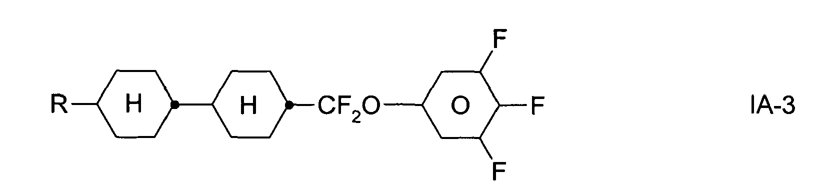 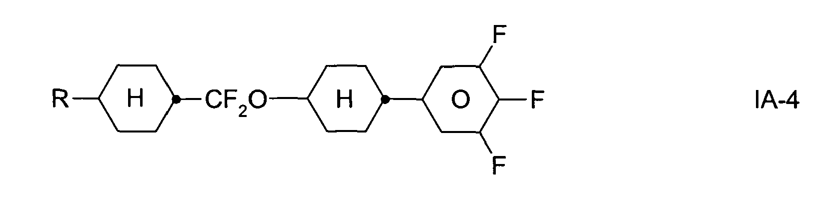 dans lesquelles R présente la signification indiquée dans la revendication 1.

9. Milieu selon la revendication 8, **caractérisé en ce qu'**il comprend un ou plusieurs composés de la formule IA-3 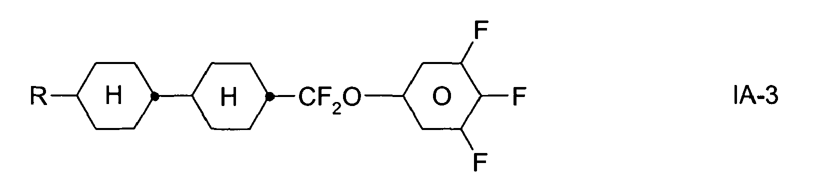 dans laquelle R présente la signification indiquée dans la revendication 1.

10. Milieu selon au moins l'une des revendications 1 à 9, **caractérisé en ce qu'**il comprend un ou plusieurs composés de la formule Il 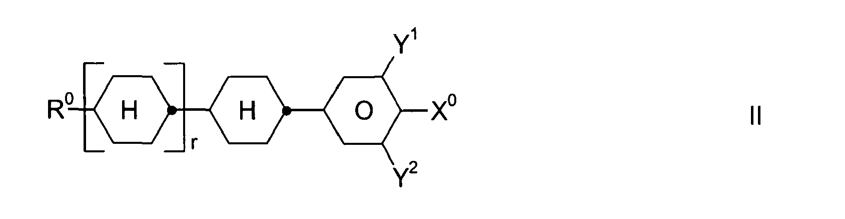 dans laquelle les radicaux individuels présentent chacun les significations indiquées dans la revendication 3.

11. Milieu selon la revendication 10, **caractérisé en ce qu'**il comprend un ou plusieurs composés de la formule IIb 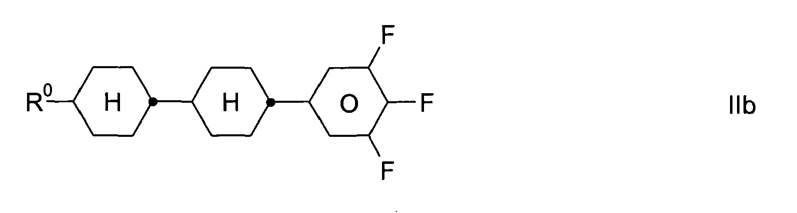 dans laquelle R⁰ présente la signification indiquée dans la revendication 10.

12. Milieu selon au moins l'une des revendications 1 à 11, **caractérisé en ce qu'**il comprend un ou plusieurs composés de la formule O1 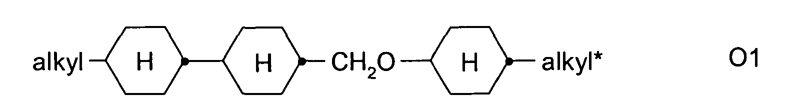 dans laquelle alkyl et alkyl*, chacun indépendamment de l'autre, représentent un groupe alkyle comportant 1-7 atomes de carbone.

13. Milieu selon au moins l'une des revendications 1 à 12, **caractérisé en ce que** la proportion de composés de la formule IA dans le mélange pris dans sa globalité est de 10 à 50% en poids.

14. Utilisation du milieu cristallin liquide selon au moins l'une des revendications 1 à 13 à des fins électro-optiques.

15. Affichage à cristaux liquides électro-optique contenant un milieu cristallin liquide selon au moins l'une des revendications 1 à 13.
